# EUROPEAN PATENT SPECIFICATION

(11) **EP 2 213 913 B1**
(45) Date of publication and mention of the grant of the patent: **16.01.2013**
(21) Application number: 08851353.6
(22) Date of filing: 19.11.2008
(51) Int. Cl.: F16J 15/32, F16C 33/78

(54) **SEALING DEVICE, ROLLING BEARING, AND ROLLING BEARING FOR WHEEL**
DICHTUNGSVORRICHTUNG, WÄLZLAGER UND WÄLZLAGER FÜR EIN RAD
DISPOSITIF D'ÉTANCHÉITÉ, PALIER À ROULEMENTS ET PALIER À ROULEMENTS POUR ROUE

(30) Priority: 20.11.2007 JP 2007300334
(43) Date of publication of application: 04.08.2010
(73) Proprietor: JTEKT Corporation, Osaka-shi Osaka 542-8502 (JP)
(72) Inventor: TABATA, Masahiro, Osaka-shi Osaka 542-8502 (JP); YAMAMOTO, Kazutoshi, deceased (JP); YAMAMOTO, Kasumi, Nara 6391161 (JP)
(74) Representative: Hager, Thomas Johannes
(86) International application number: PCT/JP2008/070980
(87) International publication number: WO 2009/066675

(56) References cited:
- JP-A- 2004 169 773
- JP-A- 2005 291 450
- JP-A- 2005 325 924
- JP-A- 2006 342 871
- JP-A- 2006 349 009
- JP-U- 4 093 571
- JP-U- 7 034 260
- JP-U- H0 493 571
- JP-U- H0 734 260
- JP-U- 63 082 867
- US-A1- 2004 086 212
- US-A1- 2005 089 254

## Description

### TECHNICAL FIELD

The present invention relates to a sealing device, and particularly to a sealing device suitably used in a rolling bearing in which raceway members having raceway surfaces comprise only a plurality of tubular members, a rolling bearing for a wheel, a water pump and a motor using a rolling bearing or a differential gear of an automobile or the like and a transmission of an automobile or the like. The present invention also relates to a rolling bearing and a rolling bearing for a wheel.

### BACKGROUND ART

JP H04 93571 U discloses a device according to the preamble part of claim 1.

US 2004/086212 A1 discloses a wheel bearing including a sealing device positioned between inner and outer members. This sealing device includes an elastic member, which eventually forms an encoder grid and is provided on a first annular sealing plate. A second annular sealing plate is provided with sealing lips. An engagement between a cylindrical wall of the first annular sealing plate and the inner member is provided with an elastic member made of a material dissimilar to that for the elastic material. This elastic member may be a rubber coated layer, resin paint layer, a thin film of adhesive material or a ring-shaped rubber member. Thereby, any possible ingress of water across an engagement surface of the annular sealing plate is prevented, accompanied by increase of the lifetime of the bearing, with no problem associated with separation and displacement of the annular sealing plates. The magnetic flux density can also be easily secured.

Conventionally, as a sealing device, there is one described in JP-UM-A-4-93571 Publication (Patent Literature 1).

This sealing device is disposed between an inner race and an outer race of a rolling bearing for a wheel. This sealing device comprises a core metal member, an elastic member fixed to the core metal member, a cross-sectionally L-shaped slinger, and a garter spring. The slinger includes an axially-extending portion, and a radially-extending portion, and the elastic member includes a radial lip always sliding on the axially-extending portion, a first axial lip sliding on the radially-extending portion, and a second axial lip disposed radially inwardly of the first axial lip and sliding on the radially-extending portion. The second axial lip has an annular groove formed in a radially-outward surface thereof.

The garter spring is fitted in the annular groove of the second axial lip. The garter spring presses the second axial lip radially inwardly.

This sealing device is formed such that in a condition in which the second axial lip is not worn, the second axial lip is not in contact with the axially-extending portion, while when the second axial lip is worn, so that a press-contacting force of the second axial lip for the radially-extending portion becomes less than a predetermined force, part of that portion of the second axial lip opposed to the axially-extending portion is brought into contact with the axially-extending portion, so that part of the above opposed portion forms a radial seal.

The second axial lip, when not in a worn condition, functions as an axial seal, while in a worn condition of the second axial lip, part of the above opposed portion of the second axial lip functions as the radial seal, so that this sealing device can continuously maintain a stable sealing function.
Patent Literature 1: JP-UM-A-4-93571 Publication (Fig. 1).

### DISCLOSURE OF THE INVENTION

### PROBLEM THAT THE INVENTION IS TO SOLVE

The inventor of the present Application has found that problems shown in the following exist in the above sealing device of the conventional construction.

Namely, it has been found that in the conventional sealing device, by always urging the second axial lip radially inwardly by the garter spring, a radially-outward resiliency of the second axial lip becomes large, so that a force of the second axial lip which presses a flange portion of the slinger becomes excessive, and in some cases, a torque becomes excessive.

Furthermore, it has been found that at the radial lip which temporarily undergoes a change of a gas pressure due to a temperature rise or a temperature drop in the interior of the bearing which is a sealed space, a change of the press-contacting force is large, and that in the condition in which the second axial lip is not in contact with the axially-extending portion, the air and lubricant are liable to escape from the interior of the bearing to the exterior of the bearing which is an outside space when the temperature within the bearing rises, while at the time of a temperature drop within the bearing which follows a temperature rise of the bearing, the air and foreign matters (muddy water and so on) are liable to be drawn into the bearing from the exterior of the bearing to intrude into the bearing because the pressure within the bearing becomes negative.

Furthermore, the problem that a frictional resistance due to the above excessive torque is large and the problem that at the time of the temperature rise of the sealed space, the gas (air) and the liquid (lubricant) are liable to escape from the sealed space, while at the time of the temperature drop of the sealed space following the time of the temperature rise of the sealed space, the air and the foreign matters (muddy water and so on) are liable to be drawn into the sealed space from the outside space to intrude into the sealed space because the pressure of the sealed space becomes negative also similarly exist in a sealing device fixed to a case member of a differential gear and sliding on a peripheral surface of an output shaft member, a sealing device fixed to a case member of a transmission device and sliding on a peripheral surface of an input shaft member or an output shaft member, a sealing device fixed to an outer ring member of a wheel bearing lubricated by lubricating oil and sliding on an inner ring member or/and a peripheral surface of the inner ring member, and a sealing device fixed to an outer ring member of a water pump and sliding on an inner ring member or/and a peripheral surface of the inner ring member.

Therefore, an object of the present invention is to provide a sealing device, a rolling bearing and a rolling bearing for a wheel, in which a torque can be reduced, and also the air and lubricant are less liable to escape from the interior of the bearing to the exterior of the bearing, and the air and foreign matters are less liable to intrude into the bearing from the exterior of the bearing.

### MEANS FOR SOLVING THE PROBLEM

The object is solved by the features of the independent claims. The dependent claims contain further preferred developments of the invention.

In order to solve the above problem, a sealing device of this invention is **characterized in that** the device comprises:
a core metal member having a tubular axially-extending portion for being fixed to a first member, and a radially-extending portion extending from the axially-extending portion in a radial direction of the axially-extending portion;
a slinger having a tubular portion for being fixed to a second member rotatable relative to the first member, and a flange portion extending from the tubular portion in the radial direction and opposed to the radially-extending portion in an axial direction of the tubular portion; and
an elastic member having a base portion fixed to the radially-extending portion, and a lip portion which is continuous with the base portion and slides on the slinger; and
the lip portion comprises:
a first axial lip extending from the base portion toward the flange portion and sliding on the flange portion;
a second axial lip which is disposed at that side of the first axial lip, facing the tubular portion in the radial direction, in spaced relation to the first axial lip in the radial direction, and slides on the flange portion; and
a radial lip which extends from the base portion away from the flange portion in a direction inclined relative to a center axis of the tubular portion of the slinger, and slides on the tubular portion; and
the first axial lip is disposed adjacent to a sealed space; and
in a prior-to-incorporation condition before the elastic member is incorporated into the slinger, the first axial lip comprises:
   a first portion having an extending direction extending from the base portion at least toward the flange portion in the axial direction;
   a second portion having an extending direction which extends from a distal end of the first portion, facing the flange portion in the axial direction, away from the tubular portion in the radial direction and also toward the flange portion in the axial direction in such a direction as to form, with the center axis of the tubular portion, an acute angle larger than an acute angle formed by the extending direction of the first portion and the center axis of the tubular portion; and
   a third portion having an extending direction which extends from a distal end of the second portion, facing away from the tubular portion in the radial direction, at least toward the flange portion in the axial direction; and
   the first axial lip has, at the flange portion side of the third portion in the axial direction, a sealing-side inclined surface which extends from that peripheral surface of the third portion, facing away from the tubular portion in the radial direction, toward the flange portion in the axial direction and also toward the tubular portion in the radial direction and faces the sealed space, an air-side inclined surface which extends from that peripheral surface of the third portion, facing the tubular portion in the radial direction, toward the flange portion in the axial direction and also away from the tubular portion in the radial direction and faces an air-side space, and a distal end edge formed between the sealing-side inclined surface and the air-side inclined surface; and
   with respect to a length in a widthwise direction perpendicular to the extending direction of the first axial lip in a cross-section containing the center axis of the tubular portion, the second portion includes a portion having a widthwise length shorter than a widthwise length of the first portion perpendicular to the extending direction thereof and a widthwise length of the third portion perpendicular to the extending direction thereof except the length of the third portion between the sealing-side inclined surface and the air-side inclined surface in the widthwise direction thereof perpendicular to the extending direction thereof in a predetermined extending direction range from the first distal end edge; and
   in an after-incorporation condition after the elastic member is incorporated in the slinger, the first axial lip abuts at the distal end edge against the flange portion, and also is pressed by the flange portion so that a length between the distal end edge and the base portion in the axial direction is shorter than the length between the distal end edge and the base portion in the axial direction in the prior-to-incorporation condition.

The term "extending in the radial direction" means "extending in an extending direction having at least a component extending in the radial direction". Therefore, the term "extending in the radial direction" includes, of course, the case of "extending in an extending direction having only a radially-extending component", and also the case of "extending in an extending direction having both a radially-extending component and an axially-extending component".

Furthermore, the first member and the second member may be bearing rings. The bearing ring means a member having a raceway surface. Therefore, even a member having no inner peripheral surface, such as an inner shaft, is included in the bearing ring if it has a raceway surface.

The extending direction means an extending direction of a two-division line interconnecting the center of an inscribed circle of one side surface of a curve change-small portion in an axial cross-section and the center of an inscribed circle of the other side surface thereof. When the two-division line is not a straight line and is one such as a curved line, a concave-convex line or others, the extending direction means the extending direction of its approximate straight line.

Furthermore, when not particularly mentioned or distinguished, the center axis of the metal core member and the elastic member coincides with the center axis of the slinger. The term "toward the tubular portion in the radial direction" has the same meaning as "away from the axially-extending portion in the radial direction", and the term "away from the tubular portion in the radial direction" has the same meaning as "toward the axially-extending portion in the radial direction", and the term "toward the flange portion in the axial direction" has the same means as "away from the radially-extending portion in the axial direction", and the term "away from the flange portion in the axial direction" has the same meaning as "toward the radially-extending portion in the axial direction".

In the present invention, the lip which requires a sealing ability for suppressing the leakage of a liquid (lubricating oil) within the sealed space since it is disposed adjacent to the sealed space is formed as the first axial lip, and the first axial lip has, at the second portion, the portion which is the shortest with respect to the widthwise direction perpendicular to the extending direction, and therefore when incorporating the first axial lip into the slinger, the second portion is most easily deformed. By deformation of this second portion, the distal end edge of the first axial lip is urged against the flange portion of the slinger mainly in the axial direction. And, even when interference which is the difference between the axial position of the distal end edge in the prior-to-incorporation condition and the axial position of the distal end edge in the after-incorporation condition is increased, the first axial lip, unlike the radial lip, does not tightly presses the flange portion, and therefore a torque can be reduced.

Furthermore, in the present invention, the interference is increased, and therefore when the center axis of the core metal member and the elastic member and the center axis of the slinger are inclined relative to each other, the distal end edge of the first axial lip easily follows the flange portion since the interference is large. Therefore, the sealing ability can be enhanced.

Furthermore, in the present invention, since this first axial lip having the large interference is disposed adjacent to the sealed space, the movement of the liquid (lubricant) to the air-side space via the first axial lip can be suppressed, and also even when the gas pressure of gas (air) existing together with the liquid in the sealed space increases because of a temperature rise of the sealed space, the gas pressure of the gas is liable to act on the portion of the second portion which is the shortest with respect to the widthwise direction perpendicular to the extending direction, and therefore the distal end edge is pressed by the flange portion so as to more enhance the sealing ability of the first axial lip, thereby suppressing the leakage of the gas to the air-side space. Therefore, when the temperature of the sealed space, for example, a chamber in which rolling elements are disposed in a rolling bearing for a wheel, decreases, the pressure of the sealed space is less liable to decrease, and the intrusion of foreign matters (muddy water and so on) from the exterior of the sealing device via the first axial lip can be suppressed.

Furthermore, in one embodiment, it is characterized that the portion of the second portion, having the widthwise length shorter than the widthwise length of the first portion perpendicular to the extending direction thereof and the widthwise length of the third portion perpendicular to the extending direction thereof except the length of the third portion between the sealing-side inclined surface and the air-side inclined surface in the widthwise direction thereof perpendicular to the extending direction thereof in the predetermined extending direction range from the first distal end edge, extends in the extending direction of the second portion.

In the above embodiment, the portion of the second portion, which has the widthwise length shorter than the width length of the first portion perpendicular to the extending direction thereof and the widthwise length of the third portion perpendicular to the extending direction thereof except the length of the third portion between the sealing-side inclined surface and the air-side inclined surface in the widthwise direction thereof perpendicular to the extending direction thereof in the predetermined extending direction range from the first distal end edge, enables the first axial lip to be smoothly deformed at the time of the incorporation at the portion of the second portion extending in the extending direction, and therefore when the center axis of the core metal member and the elastic member and the center axis of the slinger are inclined relative to each other, the distal end edge can sufficiently follow the flange portion.

Furthermore, according to the invention, the second axial lip comprises:
a fourth portion extending from the base portion toward the tubular portion in the radial direction and also toward the flange portion in the axial direction, and
a fifth portion which extends from a distal end of the fourth portion, facing the flange portion in the axial direction, away from the tubular portion in the radial direction and also toward the flange portion in the axial direction, and slides on the flange portion; and
in a non-worn condition of the elastic member after it is incorporated in the slinger, the second axial lip is disposed in spaced relation to the tubular portion in the radial direction, while in a worn condition of the elastic member after it is incorporated in the slinger and also in a condition in which a press-contacting force of the second axial lip for the flange portion is lowered beyond a predetermined force as a result of wear of the second axial lip, part of that portion of the second axial lip opposed to the tubular portion of the slinger slides on the tubular portion of the slinger
In one embodiment of the invention a bottom of an axial concave portion of that surface of the elastic member (forming the radial lip) facing away from the flange portion in the axial direction overlaps that end face of the radially-extending portion of the core metal member, facing the tubular portion, in the radial direction; and
a bottom of a radial concave portion of the elastic member (forming the radial lip) facing the tubular portion of the slinger is spaced from the end face of the core metal member toward the flange portion in the axial direction.

In the above embodiment, the bottom of the axial concave portion of the surface of the elastic member (forming the radial lip) facing way from the flange portion in the axial direction overlaps the end face of the radially-extending portion of the core metal member, facing the tubular portion, in the radial direction, and also the bottom of the radial concave portion of the elastic member (forming the radial lip) facing the tubular portion of the slinger is spaced from the end face of the core metal member toward the flange portion in the axial direction, and therefore the greater part of the radial lip is disposed to overlap the end face of the core metal member in the radial direction, so that the radial lip is less liable to be deformed. Therefore, regardless of whether the second axial lip is held in contact with the tubular portion of the slinger, and the press-contacting force of the radial lip is less liable to be varied, and the press-contacting force of the radial lip can always be set to around a desired value.

Therefore, in each specification, by suitably setting the press-contacting force of the radial lip in an initial condition, the torque due to the radial lip can be more reduced than in the past, and also the gas (air) and the liquid (lubricant) can always be made less liable to escape from the sealed space of this sealing device for a long period of time, and further foreign matters (muddy water and so on) can be made less liable to intrude into the bearing from the space outside this sealing device.

Furthermore, in the above embodiment of the present invention, the elastic member is kept in a non-contact condition relative to the tubular portion of the slinger until the press-contacting force of the second axial lip for the flange portion is lowered beyond the predetermined force, thus providing a condition in which there exists no radial lip, and therefore the torque can be reduced until the press-contacting force of the second axial lip for the flange portion is lowered beyond the predetermined force. Therefore, a fuel consumption of an automobile or the like having this sealing device can be reduced.

Furthermore, in the present invention, in the condition in which the press-contacting force of the second axial lip for the flange portion is lowered beyond the predetermined force as a result of wear of the fifth portion of the second axial lip, part of the portion of the second axial lip opposed to the tubular portion of the slinger contacts the tubular portion of the slinger, and slides on the tubular portion, and therefore even when wear of the second axial lip proceeds, the intrusion of foreign matters such as muddy water from the exterior into the sealed space, for example, a chamber in which rolling elements are disposed in a rolling bearing for a wheel, can be suppressed.

Furthermore, in one embodiment, it is **characterized in that** in the condition before the elastic member is incorporated in the slinger, that surface of the fourth portion facing the tubular portion in the radial direction is a concave surface, while that surface of the fifth portion facing the tubular portion in the radial direction is a conical surface or a convex surface.

In the present specification, a conical surface is included in a concave surface, but is not included in a convex surface.

The present inventor has found that in a sealing device of a conventional construction, deformation of that portion of a radially inwardly-disposed axial lip disposed close to a core metal member is large at the time of the incorporation and that stresses concentrate on this portion, so that the durability of this portion is lowered with the result that the life of the sealing device is shortened.

In the above embodiment, the surface of the fourth portion facing the tubular portion in the radial direction is the concave surface before the elastic member is incorporated into the slinger, and therefore unlike the case where the surface of the fourth portion facing the tubular portion in the radial direction is a convex surface, it is not necessary that in an initial condition of the incorporated condition, a portion of the fourth portion of the second axial lip disposed close to the base portion be deformed concentratedly and excessively so that the second axial lip can be disposed in a non-contact condition relative to the tubular portion of the slinger, and by deforming the whole of the fourth portion generally uniformly in the extending direction thereof, the second axial lip can be held in a non-contact condition relative to the tubular portion of the slinger. Namely, a local excessive stress will not act on part of the fourth portion, and therefore the durability of the second axial lip can be markedly enhanced, and the life of the sealing device can be prolonged.

Furthermore, in the above embodiment, the surface of the fifth portion facing the tubular portion in the radial direction is the conical surface or the convex surface in the prior-to-incorporation condition, and therefore as compared with the case where the surface of the fifth portion facing the tubular portion in the radial direction is a concave surface, the pressure of contact between the second axial lip and the flange portion of the slinger can be reduced, and the wear of the second axial lip can be suppressed. Therefore, a time period before the second axial lip is brought into contact with the tubular portion of the slinger can be prolonged, and therefore the condition in which the torque is small can be maintained for a long period of time as compared with the case where the surface of the fifth portion facing the tubular portion in the radial direction is a concave surface.

Furthermore, in one embodiment, it is **characterized in that** the surface of the fifth portion facing the tubular portion in the radial direction is smoothly continuous, and that surface of the radial lip facing the flange portion in the axial direction is smoothly continuous.

That the surface of the fifth portion facing the tubular portion in the radial direction is smoothly continuous means a condition in which in an axial cross-section of the sealing device, the surface of the fifth portion facing the tubular portion in the radial direction can be differentiated from one end to the other end, and that the surface of the radial lip facing the flange portion in the axial direction is smoothly continuous means a condition in which in an axial cross-section of the sealing device, the surface of the radial lip facing the flange portion in the axial direction can be differentiated from one end to the other end.

In the above embodiment, the surface of the fifth portion facing the tubular portion in the radial direction is smoothly continuous, and therefore a stress developing because of deformation of the second axial lip at the time of the incorporation can be distributed generally uniformly by the whole of the fifth portion and can be borne by it. Further, at the time of the incorporation, the second axial lip can be easily deformed away from the tubular portion in the radial direction (toward the tubular axially-extending portion of the core metal member in the radial direction), and also in a non-worn condition of the first and second axial lips, a predetermined clearance can be easily and accurately formed between the second axial lip and the tubular portion of the slinger.

Furthermore, in the above embodiment, the surface of the radial lip facing the flange portion in the axial direction is smoothly continuous, and therefore a stress developing because of deformation of the radial lip can be distributed generally uniformly by the whole of the radial lip and can be borne by it.

Furthermore, in one embodiment, in the prior-to-incorporation condition, in the axial cross-section, curvature of the surface of the fourth portion facing the tubular portion in the radial direction is gradually increasing toward the flange portion in the axial direction.

The term "gradually increasing toward the flange portion in the axial direction" includes the case where in the axial cross-section, the surface of the fourth portion facing the tubular portion in the radial direction includes a portion where the curvature is partially constant, as it extends gradually toward the flange portion in the axial direction. Therefore, for example, this term includes the case where in the axial cross-section, the surface of the fourth portion facing the tubular portion in the radial direction comprises a conical surface disposed close to the base portion, and a concave surface which is smoothly continuous with this conical surface and is formed by part of a spheroid.

In the above embodiment, in the prior-to-incorporation condition, in the axial cross-section, the curvature of the surface of the fourth portion facing the tubular portion in the radial direction is gradually increasing toward the flange portion in the axial direction, and therefore a stress developing because of deformation of the second axial lip at the time of the incorporation can be distributed generally uniformly by the whole of the fourth portion and can be borne by it, and when the non-contact condition of the second axial lip relative to the tubular portion is achieved, a local stress can be positively prevented from concentrating on the fourth portion.

Furthermore, according to the invention, a force which the second axial lip receives is only a force from the slinger.

In the invention, the force which the second axial lip receives is only the force from the slinger, and therefore unlike the case where there is a tightening member such as a garter spring, resiliency of the second axial lip directed away from the tubular portion in the radial direction (resiliency of the second axial lip toward the axially-extending portion of the core metal member in the radial direction) will not become excessively large, and the force with which the second axial lip presses the flange portion of the slinger will not become excessive, and the torque will not become excessive.

Furthermore, in the invention, there is no tightening member such as a garter spring for pressing that portion of the second axial lip, opposed to the tubular portion of the slinger, against the tubular portion of the slinger, and therefore as compared with the case where there is a tightening member such as a garter spring, the portion of the second axial lip opposed to the tubular portion of the slinger can be easily spaced apart from the tubular portion at the time of effecting an assembling operation in which the second axial lip is pressed against the flange portion of the slinger.

In one embodiment, a contact point of the radial lip for the tubular portion overlaps the end face of the core metal member in the radial direction.

In the above embodiment, the contact point of the radial lip for the tubular portion overlaps the end face of the core metal member in the radial direction, and therefore as compared with the past, the aging deformation of the radial lip can be further suppressed. Therefore, as compared with the past, the torque due to the radial lip can be further reduced, and also the gas (air) and the liquid (lubricant) can always be made less liable to escape from the interior of the sealed space to the outside space for a long period of time, and further the air and foreign matters (muddy water and so on) can be made less liable to intrude into the sealed space from the outside space.

Furthermore, in one embodiment, the bottom of the radial concave portion of the elastic member (forming the radial lip) facing the tubular portion of the slinger overlaps that portion of the base portion, disposed the closest to the tubular portion in the radial direction, in the radial direction.

In the above embodiment, in the elastic member, an extremely radially thickness-reduced portion will not be formed in the vicinity of that side of the radial lip facing the flange portion in the axial direction. Therefore, as compared with the past, the aging deformation of the radial lip can be further suppressed, and also the torque due to the radial lip can be reduced, and further the gas (air) and the liquid (lubricant) can always be made less liable to escape from the interior of the sealed space to the outside space for a long period of time, and further the air and foreign matters (muddy water and so on) can be made less liable to intrude from the outside space into the sealed space.

Furthermore, in the above embodiment, the axial dimension of the fourth portion can be increased. Therefore, a stress developing because of deformation of the second axial lip at the time of the incorporation can be distributed generally uniformly by the whole of the fourth portion and can be borne by it, and the application of a local excessive stress to a portion of the fourth portion can be suppressed. Therefore, the durability of the second axial lip can be markedly enhanced, and the life of the sealing device can be prolonged.

A rolling bearing of the present invention is **characterized in that** the bearing comprises:
a sealing device as set forth in any one of claims 1 to 8;
an inner ring having at least one raceway surface;
an outer ring having at least one raceway surface; and
a plurality of rolling elements disposed between the raceway surface of the inner ring and the raceway surface of the outer ring; and
the sealing device is disposed such that it seals an opening in at least one side of a rolling element-mounting chamber in the axial direction which is demarcated by an outer peripheral surface of the inner ring and an inner peripheral surface of the outer ring and in which the plurality of rolling elements are disposed; and
the slinger of the sealing device is fixed to the inner ring; and
a seal member comprising the elastic member of the sealing device and the core metal member of the sealing device is fixed to the outer ring.

In the present invention, it is provided with the sealing device of the present invention, and therefore during the operation, the torque of the sealing device can be reduced, and also the escape of the air and the lubricant from the interior of the bearing to the exterior of the bearing can be suppressed, and the intrusion of foreign matters (muddy water and so on) from the exterior of the bearing into the bearing can be suppressed.

A rolling bearing for a wheel according to the present invention is **characterized in that** the bearing comprises:
a sealing device as set forth in any one of claims 1 to 8;
a first inner ring fixed to the inner shaft and having a first raceway surface;
a second inner ring fixed to the inner shaft and having a second raceway surface;
an outer ring having a third raceway surface and a fourth raceway surface;
a plurality of first rolling elements disposed between the first raceway surface and the third raceway surface; and
a plurality of second rolling elements disposed between the second raceway surface and the fourth raceway surface; and
the sealing device is disposed such that it seals an opening in at least one side of a rolling element-mounting chamber in the axial direction which is demarcated by an inner peripheral surface of the outer ring and those portions of outer peripheral surfaces of the first inner ring and the second inner ring opposed to the inner peripheral surface of the outer ring and in which the plurality of rolling elements are disposed; and
the slinger of the sealing device is fixed to at least one of the first inner ring and the second inner ring; and
a seal member comprising the elastic member of the sealing device and the core metal member of the sealing device is fixed to the outer ring.

In the present invention, it is provided with the sealing device of the present invention, and therefore during the operation, the torque of the sealing device can be reduced, and also the escape of the air and the lubricant from the interior of the bearing to the exterior of the bearing can be suppressed, and the intrusion of foreign matters (muddy water and so on) from the exterior of the bearing into the bearing can be suppressed.

### ADVANTAGE OF THE INVENTION

In the sealing device, the rolling bearing and the rolling bearing for the wheel according to the present invention, during the operation, the torque can be reduced, and also the escape of the air and the lubricant from the interior of the bearing to the exterior of the bearing can be suppressed, and the intrusion of foreign matters (muddy water and so on) from the exterior of the bearing into the bearing can be suppressed.

### BRIEF DESCRIPTION OF THE DRAWINGS

[Fig. 1] This is an axial cross-sectional view of a rolling bearing for a wheel which has sealing devices according to one embodiment of the present invention.
[Fig. 2] This is an enlarged cross-sectional view of the whole of the sealing device of the above embodiment.
[Fig. 3] This is an enlarged cross-sectional view of an important portion of the sealing device of the above embodiment.
[Fig. 4] This is an enlarged cross-sectional view of the whole of the sealing device of the above embodiment.
[Fig. 5] This is an enlarged cross-sectional view of a water pump provided with a sealing device of the present invention, showing an area around the sealing device.
[Fig. 6] This is an exploded perspective view of a differential gear provided with a sealing device of the present invention.
[Fig. 7] This is a cross-sectional view of the differential gear provided with the sealing device of the present invention.

### BEST MODE FOR CARRYING OUT THE INVENTION

The present invention will be described below in detail by illustrated embodiments.

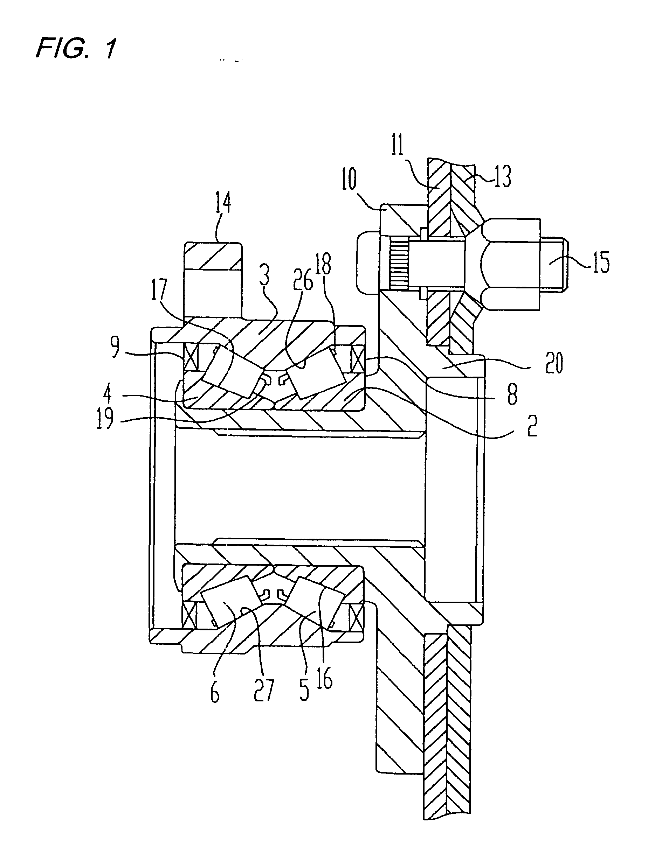

Fig. 1 is an axial cross-sectional view of a rolling bearing for a wheel which has sealing devices according to one embodiment of the present invention.

This rolling bearing for the wheel comprises an inner shaft 20, an outer ring 3, a first inner ring 2, a second inner ring 4, a plurality of first tapered rollers 5, a plurality of second tapered rollers 6, the first sealing device 8 according to one embodiment of the present invention, and the second sealing device 9 according to one embodiment of the present invention. The first tapered rollers 5 form first rolling elements, and the second tapered rollers 6 form second rolling elements.

The inner shaft 20 has at its one axial end portion a radially-spreading brake disk-mounting flange 10 of a disk-like shape for the mounting of a brake disk 11 thereon. A plurality of bolt passage holes are formed on a concentric circle having its center disposed substantially at the center of this brake disk mounting flange 10. The brake disk 11 is held against the brake disk mounting flange 10, and further a wheel member 13 is held against the brake disk 11, and in this condition the region between that end face of the wheel member 13 facing away from the brake disc 11 and the brake disk-mounting flange 10 are fixed by a plurality of bolts 15.

The first inner ring 2 and the second inner ring 4 are externally fitted on the other axial end portion of the inner shaft 20 to be arranged in this order from the one axial end thereof, and are fixed thereto. A first raceway groove 16 of the tapered type serving as a first raceway surface is formed in an outer peripheral surface of the first inner ring 2, while a second raceway groove 17 of the tapered type serving as a second raceway surface is formed in an outer peripheral surface of the second inner ring 4.

The outer ring 3 is disposed on that portion of the inner shaft 20, spaced from the brake disk-mounting flange 10 toward the above other end portion, in opposed relation to the first inner ring 2 and the second inner ring 4. The outer ring 3 has a radially-spreading vehicle body side-mounting flange 14 disposed at the above other axial end portion. A plurality of bolt passage holes for the insertion of bolts for mounting the vehicle body side-mounting flange 14 on the vehicle body side (knuckle) are formed through this disk-like vehicle body side-mounting flange 14. The outer ring 3 has a third raceway groove 26 of the tapered type serving as a third raceway surface and a fourth raceway groove 27 of the tapered type serving as a fourth raceway surface which are formed on an inner peripheral surface of the outer ring 3 and are spaced from each other in the axial direction, and the third raceway groove 26 of the tapered type is disposed closer to the above one end portion than the fourth raceway groove 27.

The plurality of first tapered rollers 5 are disposed between the first raceway groove 16 of the first inner ring 2 and the third raceway groove 26 of the outer ring 3 at predetermined intervals in a circumferential direction in such a condition that the first tapered rollers are held by a cage 18. The plurality of second tapered rollers 6 are disposed between the second raceway groove 17 of the second inner ring 4 and the fourth raceway groove 27 of the outer ring 3 at predetermined intervals in the circumferential direction in such a condition that the second tapered rollers are held by a cage 19.

The second sealing device 9 is disposed in the vicinity of an opening of a space between the second inner ring 4 and the outer ring 3 which opening is disposed at the above other axial end portion side (the opposite side from the brake disk-mounting flange 10). The second sealing device 9 seals the above the other end portion-side opening of the space between the second inner ring 4 and the outer ring 3. On the other hand, the first sealing device 8 is disposed in the vicinity of an opening of a space between the first inner ring 2 and the outer ring 3 which opening is disposed at the above one axial end portion side (the brake disk-mounting flange (10) side). The first sealing device 8 seals the above one end portion-side opening of the space between the first inner ring 2 and the outer ring 3. The first sealing device 8 has the same structure as that of the second sealing device 9.

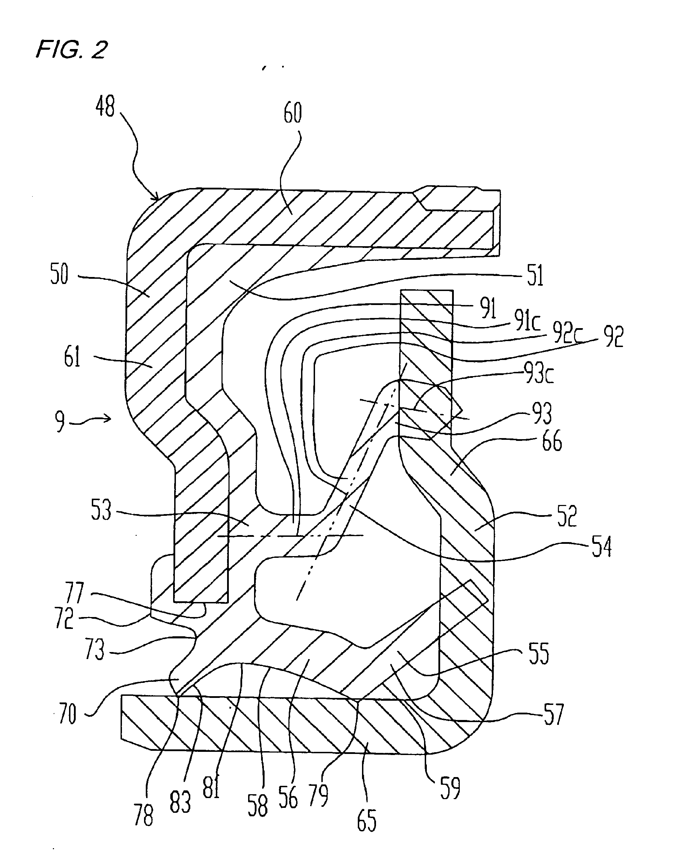

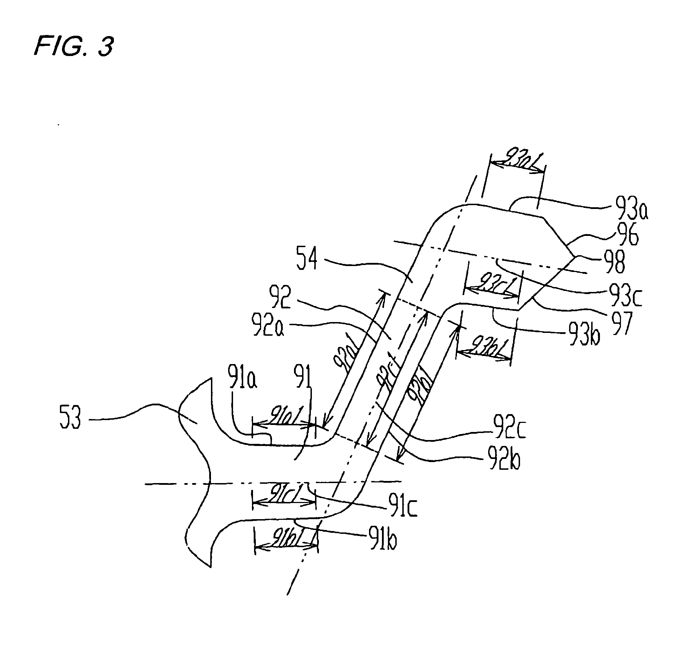

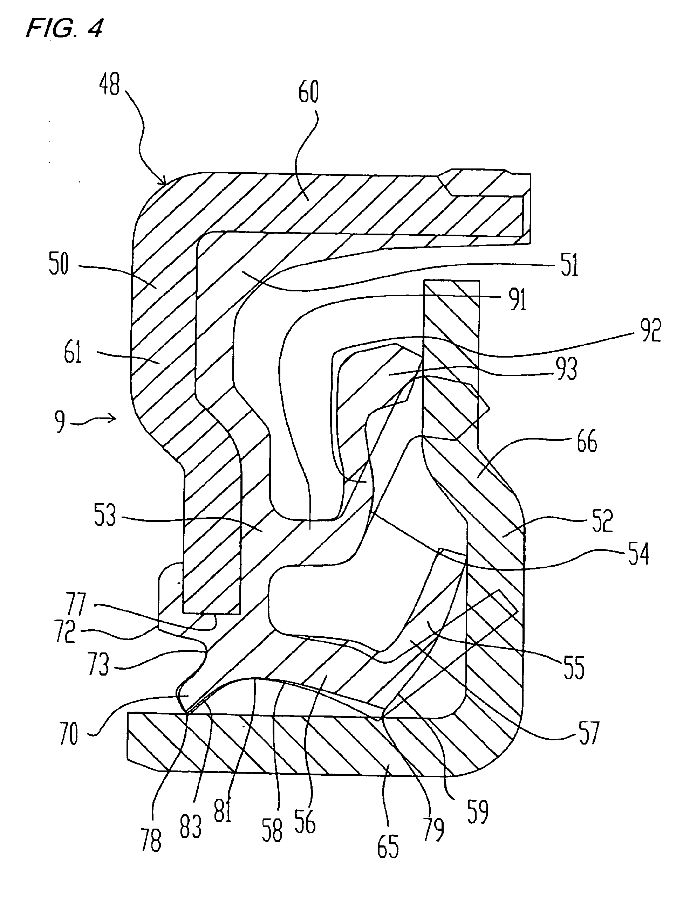

Fig. 2, Fig. 3 and Fig. 4 are cross-sectional views for explaining the structure of the second sealing device 9 in detail. Specifically, Fig. 2 is the axial cross-sectional view showing the positional relationship of a core metal member 50, an elastic member 51 and a slinger 52. In Fig. 2, as the position of the elastic member 51, the position where the elastic member is disposed in its mounted position assuming that the elastic member 51 does not receive a force from the slinger 52 is shown. Fig. 3 shows a first axial lip 54 of Fig. 2 on an enlarged scale. On the other hand, Fig. 4 is the cross-sectional view showing the position of the elastic member 51 and the position of the slinger 51 in a condition in which the elastic member 51 is mounted on the slinger 52 and also in a non-worn condition of the elastic member 51 in which it is not worn. The first sealing device 8 has the same structure as that of the second sealing device 9. In a condition in which the left and right sides are reversed in the axial direction in Fig. 2, Fig. 3 and Fig. 4, the first sealing device 8 is disposed in the vicinity of the one axial end portion-side opening of the space between the first inner ring 2 and the outer ring 3. Explanation of the first sealing device 8 is omitted with the explanation of the second sealing device 9.

As shown in Fig. 2, the second sealing device (hereinafter referred to merely as sealing device) 9 has the core metal member 50, the elastic member 51 and the slinger 52. The core metal member 50 and the elastic member 51 are fixed to each other to be integral with each other. The core metal member 50 and the elastic member 51 form a seal member 48.

The core metal member 50 is formed into an annular shape. The core metal member 50 has a cross-sectionally L-shape. The core metal member includes a tubular axially-extending portion 60, and a radially-extending portion 61. The axially-extending portion 60 is internally fitted to the inner peripheral surface of the outer ring 3 (see Fig. 1; not shown in Fig. 2) serving as a first member, and is fixed thereto. The radially-extending portion 61 extends radially inwardly from the above other end portion side (the left side in the sheet of Fig. 2, and namely the axially-outward side (the side axially facing away from the rolling elements)) of an inner peripheral surface of the axially-extending portion 60.

The slinger 52 is formed into an annular shape. The slinger 52 has a cross-sectionally L-shape. The slinger 52 has a tubular portion 65 and a flange portion 66 continuous with the tubular portion 65. The tubular portion 65 is externally fitted to the outer peripheral surface of the second inner ring 4 serving as a second member, and is fixed thereto. It is needless to say that in the first sealing device 8, the member corresponding to the second member to which the slinger is fixed is the first inner ring 2. The flange portion 66 extends radially outwardly from an axially-inward (right in the sheet) end portion of an outer peripheral surface of the tubular portion 65. The flange portion 66 is disposed axially inwardly of the radially-extending portion 61 of the core metal member 50. The greater part of the flange portion 66 except a radially-inward portion thereof is axially opposed to the radially-extending portion 61 with a gap formed therebetween.

The elastic member is formed into an annular shape. The elastic member 51 is fixedly secured to the core metal member 50 in such a manner that it covers an entire area of the inner peripheral surface of the axially-extending portion 60 and an entire area of an axially-inward end face of the radially-extending portion 61 continuous with the inner peripheral surface of the axially-extending portion 60. The elastic member has a base portion 53, the first axial lip 54, a second axial lip 55 and a radial lip 70. Specifically, the elastic member 51 is made of a rubber material. As the rubber material, for example, nitrile rubber, nitrile hydride rubber, acrylic rubber, silicone rubber or fluoro rubber can be suitably used.

The base portion 53 is disposed to extend along the inner peripheral surface of the axially-extending portion 60 and the axially-inward end face of the radially-extending portion 61. The base portion 53 is fixedly secured to the inner peripheral surface of the axially-extending portion 60 and the axially-inward end face of the radially-extending portion 61. The first axial lip 54 extends from the base portion 53 toward the outer ring 3 (see Fig. 1) and also inwardly in the axial direction (toward the flange portion 66 in the axial direction).

The first axial lip 54 has a first portion 91, a second portion 92 and a third portion 93. As shown in Fig. 3, an extending direction 91c, including a range 91c1 of a straight line interconnecting the center of an inscribed circle of a curve change-small (straight) range 91a1 of a radially-outward surface 91 a of the first portion 91 in an axial cross-section and the center of an inscribed circle of a curve change-small (straight) range 91bl of a radially-inward surface 91b of the first portion 91 in the axial cross-section, extends axially inwardly (toward the flange portion 66 in the axial direction) and also radially outwardly (toward the axially-extending portion 60 in the radial direction). The extending direction 91c of the first portion 91 may extend only axially inwardly or may extend axially inwardly and also radially inwardly.

The second portion 92 extends from an axially-inward distal end of the first portion 91. An extending direction 92c, including a range 92cl of a straight line interconnecting the center of an inscribed circle of a curve change-small (straight) range 92a1 of a radially-outward surface 92a of the second portion 92 in the axial cross-section and the center of an inscribed circle of a curve change-small (straight) range 92bl of a radially-inward surface 92b of the second portion 92 in the axial cross-section, extends axially inwardly (toward the flange portion 66 in the axial direction) and also radially outwardly (toward the axially-extending portion 60 in the radial direction). The extending direction 92c of the second portion 92 is inclined relative to a center axis of the axially-extending portion 60. An acute angle formed by the extending direction 92c of the second portion 92 and the center axis of the axially-extending portion 60 is larger than an acute angle formed by the extending direction 91c of the first portion and the center axis of the axially-extending portion 60.

The third portion 93 extends from a radially-outward and axially-inward distal end of the second portion 92. An extending direction 93c, including a range 93cl of a straight line interconnecting the center of an inscribed circle of a curve change-small (straight) range 93al of a radially-outward surface 93a of the third portion 93 in the axial cross-section and the center of an inscribed circle of a curve change-small (straight) range 93b1 of a radially-inward surface 93b of the third portion 93 in the axial cross-section, extends axially inwardly (toward the flange portion 66 in the axial direction) and also radially inwardly (away from the axially-extending portion 60 in the radial direction). An acute angle formed by the extending direction 93c of the third portion and the center axis of the axially-extending portion 60 is smaller than the acute angle formed by the extending direction 92c of the second portion and the center axis of the axially-extending portion 60. The extending direction 93c of the third portion 93 may extend only axially inwardly or may extend axially inwardly and also radially outwardly.

The third portion 93 has a sealing-side inclined surface 96 extending axially inwardly and radially inwardly from the radially-outward surface 93a of the third portion 93 in the axial cross-section. The sealing-side inclined surface 96 is a generally-conical surface. The sealing-side inclined surface 96 is disposed in facing relation to a sealed space. The third portion 93 has an air-side inclined surface 97 extending axially inwardly and radially outwardly from the radially-inward surface 93b of the third portion 93 in the axial cross-section. The air-side inclined surface 92 is a generally-conical surface. The portion at which the sealing-side inclined surface 96 and the air-side inclined surface 97 intersect each other is formed into a distal end edge 98. In a condition after the incorporation, the distal end edge 98 abuts against the flange portion 66, and slides on the flange portion 66 by the rotation relative to the slinger 52 about the center axis of the seal member 48.

In the range 92cl of the second portion 92 in the extending direction 92c, a widthwise direction of the second portion 92 perpendicular to the extending direction 92c is uniform. The widthwise direction of the second portion 92 perpendicular to the extending direction 92c in the range 92c of the second portion 92 in the extending direction 92c is the shortest widthwise length in the first axial lip 54 except a widthwise direction between the sealing-side inclined surface 96 and the air-side inclined surface 97 which is perpendicular to the extending direction 93c of the third portion 93 in a predetermined range from the distal end edge 98 of the third portion 93 toward the axially-outward side.

The second axial lip 55 is disposed radially at the inner shaft (20) (see Fig. 1) side (radially inwardly of) the first axial lip 54 in spaced relation to the first axial lip 54 in the radial direction.

The second axial lip 55 has a fourth portion 56 and a fifth portion 57. The fourth portion 56 extends from the base portion 53 radially toward the tubular portion 65 and also axially toward the flange portion 66. The fifth portion 57 is continuous with an axially-inward (axial flange portion (66)-side) distal end of the fourth portion 56, and also extends radially toward the outer ring 3 and also axially inwardly.

The radial lip 70 extends from the base portion 53 radially toward the tubular portion 65 (radially toward the second inner ring 4) and also toward the axially-outward side (the side facing axially away from the flange portion) of the second inner ring 4, and is adapted to slide on the tubular portion 65 of the slinger 52. In other words, the radial lip 70 extends from the base portion 53 away from the flange portion in a direction inclined relative to the center axis of the tubular portion 65 of the slinger 52, and is adapted to slide on the tubular portion 65. That surface 83 of the radial lip 70 facing the flange portion 66 in the axial direction is smoothly continuous.

As shown in Fig. 2, assuming that the elastic member 51 does not receive a force from the slinger 52, the position of the elastic member 51 overlaps the slinger 52 in its mounted position. Specifically, the axially-inward distal end portion of the first axial lip 54 of the elastic member 51 and the axially-inward distal end portion of the second axial lip 55 of the elastic member 51 overlap the flange portion 66 of the slinger 52, and in the second axial lip 55, a bent portion (part of that portion of the second axial lip 55 opposed to the tubular portion 65 in the radial direction) disposed in the vicinity of a connecting portion between the fourth portion 56 and the fifth portion 57 overlaps the tubular portion 65 of the slinger 52.

Furthermore, as shown in Fig. 2, in a condition before the elastic member 51 is incorporated into the slinger 52, a radially-inward surface 58 of the fourth portion 56 is a concave surface, while a radially-inward surface 59 of the fifth portion 57 is a conical surface. In the axial cross-section, curvature of the radially-inward surface 58 of the fourth portion 56 is gradually increasing axially inwardly (toward the flange portion 66 in the axial direction). Specifically, in the axial cross-section, the radially-inward surface 58 of the fourth portion 56 comprises a generally conical surface-like portion disposed close to the base portion 53, and a portion which is smoothly continuous with this conical surface-like portion and is formed by part of a general spheroid gradually increasing in curvature axially inwardly (toward the flange portion 66 in the axial direction).

In the axial cross-section, the radially-inward surface 59 of the fifth portion 57 can be differentiated from one end to the other end, and the surface 59 is smoothly continuous.

As shown in Fig. 4, when in the mounted condition, the distal end edge 98 of the first axial lip 54 and the fifth portion 57 of the second axial lip 55 slide on the flange portion 66 of the slinger 52 by a relative rotation of the seal member 48 and the slinger 52 generally about the center axis of the rolling bearing for the wheel.

As shown in Fig. 4, in the mounted condition, the first axial lip 54 abuts at its distal end edge 98 against the flange portion 66 of the slinger 52. In the mounted condition, the first axial lip 54 is deformed, and an axial distance between the distal end edge 98 and the base portion 53 is shorter than the axial distance between the distal end edge 98 and the base portion 53 in the condition before the mounting. By deformation of the first axial lip 54, the distal end edge 98 is urged against the flange portion 66. The first axial lip 54 is pressed against the flange portion 66.

In the range 92c 1 of the second portion 92 in the extending direction 92c, the widthwise direction of the second portion 92 perpendicular to the extending direction 92c of the second portion 92 is uniform, and is the shortest widthwise length in the first axial lip 54 except the widthwise direction between the sealing-side inclined surface 96 and the air-side inclined surface 97 which is perpendicular to the extending direction 93c of the third portion 93 in the predetermined range axially outwardly from the distal end edge 98 of the third portion 93. Therefore, in the mounted condition, the first axial lip 54 is deformed mainly at the range 92c1 of the second portion 92 in the extending direction 92c, and also the deformation can be absorbed by the whole of the range 92c1 of the second portion 92 in the extending direction 92c.

In the condition before the mounting, with respect to the acute angle formed by the extending direction 91c of the first portion 91 of the first axial lip 54 and the rotation axis of the axially-extending portion 60 and the acute angle formed by the extending direction 92c of the second portion 92 and the rotation axis of the axially-extending portion 60, the acute angle formed by the extending direction of the second portion 92 and the rotation axis of the axially-extending portion 60 is larger. Therefore, as compared with the case where deformation is effected at the portion of the first portion 91 in the extending direction 91c, a movement of the distal end edge 98 in the radial direction can be suppressed, and at the time when the mounting is effected, the radial position of the distal end edge 98 is less liable to be deviated from a predetermined position.

As shown in Fig. 4, in the mounted condition and in a non-worn condition after the incorporation, the second axial lip 55 is disposed in spaced relation to the tubular portion 65 of the slinger 52 in the radial direction. Namely, as shown in Fig. 2 and Fig. 4, at the time when the mounting is effected, the core metal member 50 and the slinger 52 are moved relative to each other in the axial direction so that the radially-extending portion 61 of the core metal member 50 and the flange portion 66 of the slinger 52 approach each other, and by doing so, the distal end edge 98 of the first axial lip 54 is pressed against the surface of the flange portion 66 of the slinger 52, and moves mainly axially outwardly, and also the fifth portion 57 of the second axial lip 55 moves radially outwardly (away from the tubular portion in the radial direction) along the surface of the flange portion 66 of the slinger 52, and therefore the bent portion between the fourth portion 56 and the fifth portion 57 moves radially outwardly, so that the bent portion floats radially outwardly off the outer peripheral surface of the tubular portion 65.

As shown in Fig. 4, an axially-innermost first section 73 of an axially-outermost surface 72 of the elastic member 51 radially overlaps that end face 77 of the radially-extending portion 61 of the core metal member 50 facing the tubular portion 65 (see Fig. 1) in the radial direction. In other words, the bottom 73 of an axial concave portion in the surface 72 of the elastic member 51 (forming the radial lip 70) facing away from the flange portion in the axial direction radially overlaps the tubular portion (65)-side end face of the radially-extending portion 61 of the core metal member 50.

Furthermore, in the range of from a contact point 78 of the radial lip 70 for the tubular portion 65 of the slinger 52 to an axially-innermost second section 79 of the fourth portion 56 in the axial direction, a third section 81 of a radial tubular portion (65)-side end face of the elastic member 50 which is disposed the closest to the outer ring 3 in the radial direction is disposed axially inwardly of the end face 77 of the core metal member 77. In other words, the bottom 81 of the radial concave portion of the elastic member 51 (forming the radial lip 70) facing the tubular portion 65 of the slinger 52 is spaced from the end face 77 of the core metal member 50 toward the flange portion 66 in the axial direction.

Furthermore, the contact point 78 of the radial lip 70 for the tubular portion 65 of the slinger 52 overlaps the end face 77 of the core metal member 50 in the radial direction. Furthermore, the third section (the bottom of the radial concave portion) 81 radially overlaps that portion of the base portion 53 of the elastic member 51 disposed most radially inwardly (radially the closest to the tubular portion 65).

As shown in Fig. 4, a force which the second axial lip 55 receives is only a force from the flange portion 66 of the slinger 52. Namely, in this embodiment, there is no tightening member such as a garter spring for pressing the bent portion radially inwardly, and the second axial lip 55 will not receive a radially-inward force from the tightening member such as a garter spring. In this embodiment, since there is no tightening member such as a garter spring, the bent portion can be easily and positively caused to float off the outer peripheral surface of the tubular portion 65 toward the outer ring 3 in the radial direction. In case there is provided a tightening member such as a garter spring for pressing the bent portion radially inwardly, the bent portion sometimes does not float off the outer peripheral surface of the tubular portion of the slinger toward the outer ring in the radial direction.

As mentioned above, assuming that the elastic member 51 does not receive a force from the slinger 52, the position of the bent portion is so set that it overlaps the tubular portion 65. In a condition in which the contact load of the second axial lip 55 for the flange portion 66 is lowered beyond a predetermined force as a result of wear of the fifth portion 57 of the second axial lip 55, the bent portion contacts the tubular portion 65 of the slinger 52, and slides on the tubular portion 65 by a relative rotation of the seal member 48 and the slinger 52 generally about the center axis of the rolling bearing for the wheel. Namely, In the condition in which the contact load of the second axial lip 55 for the flange portion 66 is lowered beyond the predetermined force as a result of wear of the fifth portion 57 of the second axial lip 55, the bent portion plays a role of a radial lip.

Furthermore, in Fig. 4, lubricant (lubricating oil in this embodiment) is sealed or circulated in a rolling element-mounting chamber which leads to a region surrounded by the first axial lip 54 and the slinger 52 and in which the rolling elements (the tapered rollers 5, 6 in this embodiment) disposed axially inwardly (right side in the sheet) of the second sealing device 9 are mounted, and the surfaces of the tapered rollers 5, 6 (see Fig. 1), the raceway grooves 16, 17, 26, 27 (see Fig. 1) and so on are lubricated.

In the sealing device of the above embodiment, the lip, which is most required to have such a sealing ability as to suppress the leakage of the liquid (lubricating oil) within the sealed space since it is disposed adjacent to the sealed space, is formed as the first axial lip 54, and the first axial lip 54 has at the second portion 92 the portion which is shorter with respect to the widthwise direction perpendicular to the extending direction 92c than the widthwise length of the first portion perpendicular to the extending direction thereof and the widthwise length of the third portion perpendicular to the extending direction thereof except the length of the third portion between the sealing-side inclined surface and the air-side inclined surface in the widthwise direction thereof perpendicular to the extending direction thereof in the predetermined extending direction range from the first distal end edge, and therefore when incorporating the first axial lip 54 into the slinger 52, the second portion 92 is most easily deformed. By deformation of this second portion 92, the distal end edge 98 of the first axial lip 98 is urged against the flange portion 66 of the slinger 52 mainly in the axial direction. And, even when interference which is the difference between the axial position of the distal end edge 98 in the prior-to-incorporation condition and the axial position of the distal end edge 98 in the after-incorporation condition is increased, the first axial lip 54, unlike a radial lip, does not tightly presses the flange portion 66, and therefore the torque can be reduced.

Furthermore, in the sealing device of the above embodiment, the interference is increased, and therefore when the center axis of the seal member 48, comprising the core metal member 50 and the elastic member 51, and the center axis of the slinger 52 are inclined relative to each other, the distal end edge 98 of the first axial lip 54 easily follows the flange portion 66 since the interference is large. Therefore, the sealing ability can be enhanced.

Furthermore, in the sealing device of this embodiment, since this first axial lip 54 having the large interference is disposed adjacent to the sealed space, the movement of the liquid (lubricant) to the air-side space via the first axial lip 54 can be suppressed, and also even when the gas pressure of the gas (air) existing together with the liquid in the sealed space increases because of a temperature rise within the sealed space, the gas pressure of the gas is liable to act on the range 92c1 of the portion of the second portion 92 which is the shortest in the widthwise direction perpendicular to the extending direction, and therefore the distal end edge is pressed by the flange portion 66 so as to more enhance the sealing ability of the first axial lip 54, thereby suppressing the leakage of the gas to the air-side space. Therefore, when the temperature of the sealed space, for example, the chamber in which the rolling elements are disposed in the rolling bearing for the wheel, decreases, the pressure of the sealed space is less liable to decrease, and the intrusion of foreign matters (muddy water and so on) from the exterior of the sealing device via the first axial lip 54 can be suppressed.

Furthermore, in the sealing device of the above embodiment, the portion 92 of the second portion 92, which has the widthwise length shorter than the widthwise length of the first portion perpendicular to the extending direction thereof and the widthwise length of the third portion perpendicular to the extending direction thereof except the length of the third portion between the sealing-side inclined surface and the air-side inclined surface in the widthwise direction perpendicular to the extending direction thereof in the predetermined extending direction range from the first distal end edge, has the range 92c 1 extending in the extending direction 92c of the second portion.

In the above embodiment, the portion 92c1 of the second portion 92, which has the widthwise length shorter than the widthwise length of the first portion perpendicular to the extending direction thereof and the widthwise length of the third portion perpendicular to the extending direction thereof except the length of the third portion between the sealing-side inclined surface and the air-side inclined surface in the widthwise direction perpendicular to the extending direction thereof in the predetermined extending direction range from the first distal end edge, enables the first axial lip 54 to be smoothly deformed at the time of the incorporation at the portion of the second portion 92 extending in the extending direction 92c, and therefore when the center axis of the seal member 48, comprising the core metal member 50 and the elastic member 51, and the center axis of the slinger 52 are inclined relative to each other, the distal end edge 98 can sufficiently follow the flange portion.

Furthermore, in the sealing device of the above embodiment, the bottom 73 of the axial concave portion in the surface of the elastic member 51 (forming the radial lip 70) facing way from the flange portion in the axial direction overlaps the end face 77 of the radially-extending portion 61 of the core metal member 50, facing the tubular portion 65, in the radial direction, and also the bottom 81 of the radial concave portion of the elastic member 51 (forming the radial lip 70) facing the tubular portion 65 of the slinger 52 is spaced from the end face 77 of the core metal member 50 toward the flange portion 66 in the axial direction, and therefore the greater part of the radial lip 70 is disposed to overlap the end face 77 of the core metal member 50 in the radial direction, so that the radial lip 70 is less liable to be deformed. Therefore, regardless of whether the second axial lip 55 is held in contact with the tubular portion 65 of the slinger 52 or not and of whether the gas pressure within the bearing is high or low, the press-contacting force of the radial lip 70 is hardly affected by these factors, and is less liable to be varied, and the press-contacting force of the radial lip 70 can always be set to around a desired value.

Therefore, in each specification, by suitably setting the press-contacting force of the radial lip 70 in an initial condition, the torque due to the radial lip 70 can be more reduced than in the past, and also the air and the lubricant can always be made less liable to escape from the interior of the bearing to the exterior of the bearing for a long period of time, and further foreign matters (muddy water and so on) can be made less liable to intrude from the exterior of the bearing into the bearing.

Furthermore, even when the temperature within the bearing increases because of the agitation of the grease or for other reasons, so that the internal pressure within the bearing increases, the direction of the second axial lip 55 will not be changed radially outwardly by the flow of the air, and therefore there will not occur a situation in which when the temperature within the bearing decreases thereafter, the second axial lip 55 whose direction is changed radially outwardly causes a side-abutting with the result that the contact load of the second axial lip 55 increases. Therefore, the increase of the torque due to the side-abutting of the second axial lip 55 will not occur.

Furthermore, in the sealing device of the above embodiment, the elastic member 51 is kept in a non-contact condition relative to the tubular portion 65 of the slinger 52 until the contact load of the second axial lip 55 for the flange portion 66 is lowered beyond the predetermined force, thus providing a condition in which there exists no radial lip, and therefore the torque can be reduced until the contact load of the second axial lip 55 for the flange portion 66 is lowered beyond the predetermined force.

Furthermore, in the sealing device of the above embodiment, in the prior-to-incorporation condition before the elastic member 51 is incorporated into the slinger 52, the radially-inward surface 58 of the fourth portion 56 is the concave surface, and therefore unlike the case where the fourth portion is a convex surface, it is not necessary that in a non-worn condition when in the incorporated condition, a portion of the fourth portion 56 of the second axial lip 55 disposed close to the base portion 53 be deformed concentratedly and excessively so that the second axial lip 55 can be disposed in a non-contact condition relative to the tubular portion 65 of the slinger 52. And, by deforming the whole of the fourth portion 56 generally uniformly in the extending direction thereof, the second axial lip 55 can be kept in a non-contact condition relative to the tubular portion 65 of the slinger 52. Namely, a local excessive stress will not act on part of the fourth portion 56, and therefore the durability of the second axial lip 55 can be markedly enhanced, and the life of the sealing device can be prolonged.

Furthermore, in the sealing device of the above embodiment, the radially-inward surface 59 of the fifth portion 57 is the conical surface in the prior-to-incorporation condition, and therefore as compared with the case where the radially-inward surface of the fifth portion is a concave surface, the pressure of contact between the second axial lip 55 and the flange portion 66 of the slinger 52 can be reduced, and the wear of the second axial lip 55 can be suppressed. Therefore, a time period before the bent portion of the second axial lip 55 is brought into contact with the tubular portion 65 of the slinger 52 can be prolonged, and the condition in which the torque is small can be maintained for a long period of time as compared with the case where the radially-inward surface of the fifth portion is a concave surface.

Furthermore, in the sealing device of the above embodiment, the radially-inward surface 59 of the fifth portion 57 is smoothly continuous, and therefore incorporation can be distributed generally uniformly over the whole of the fifth portion 57, and can be borne uniformly by the whole of the fifth portion 57. Further, at the time of the incorporation, the second axial lip 55 can be easily deformed radially outwardly, and also in a non-worn condition of the second axial lip 55, a predetermined clearance can be easily and accurately formed between the second axial lip 55 and the tubular portion 65 of the slinger 52.

Furthermore, in the sealing device of the above embodiment, the surface 83 of the radial lip 70 facing the flange portion 66 in the axial direction is smoothly continuous, and therefore a stress developing because of deformation of the radial lip 70 can be distributed generally uniformly by the whole of the radial lip 70 and can be borne by it. Further, at the time of the incorporation, the radial lip 70 can be easily deformed axially inwardly.

Furthermore, in the sealing device of the above embodiment, in the prior-to-incorporation condition, in the axial cross-section, the curvature of the radially-inward surface of the fourth portion 56 is gradually increasing axially inwardly, and therefore a stress developing because of deformation of the second axial lip 55 at the time of the incorporation can be distributed generally uniformly over the whole of the fourth portion 56, and can be borne uniformly by the whole of the fourth portion 56, and a local concentration of the stress on the fourth portion 56 can be positively prevented from occurring. Therefore, the life of the sealing device can be further prolonged.

Furthermore, in the sealing device of the above embodiment, in the condition in which the press-contacting force of the second axial lip 55 for the flange portion 66 is lowered beyond the predetermined force as a result of wear of the fifth portion 57 of the second axial lip 55, the bent portion contacts the tubular portion 65 of the slinger 52, and slides on the tubular portion 65. Therefore, even when the wear of the second axial lip 55 proceeds, the intrusion of muddy water from the exterior into the tapered roller-mounting chamber of the wheel rolling bearing in which the tapered rollers 8, 9 are disposed can be suppressed.

Furthermore, in the sealing device of the above embodiment, the force which the second axial lip 55 receives is only the force from the slinger 52, and there is no tightening member such as a garter spring for pressing the portion of the second axial lip 55, opposed to the tubular portion 65 of the slinger 52, against the tubular portion 65 of the slinger 52. Therefore, as compared with the case where there is a tightening member such as a garter spring for pressing the portion of the second axial lip, opposed to the tubular portion of the slinger, against the tubular portion of the slinger, the portion opposed to the tubular portion 65 of the slinger 52 can be easily spaced apart from the tubular portion 65 at the time of effecting the assembling operation in which the second axial lip 55 is pressed against the flange portion 66 of the slinger 52.

Furthermore, in the sealing device of the above embodiment, the contact point 78 of the radial lip 70 for the tubular portion 65 of the slinger 52 overlaps the radially-inward end face 77 of the radially-extending portion 61 of the core metal member 50 in the radial direction, and therefore the aging deformation of the radial lip 70 can be further suppressed. Therefore, the torque due to the radial lip 70 can be further reduced, and also the air and the lubricant can always be made less liable to escape from the interior of the bearing to the exterior of the bearing for a long period of time, and further foreign matters (muddy water and so on) can be made less liable to intrude into the interior of the bearing from the exterior of the bearing.

In the sealing device of the above embodiment, the bottom 81 of the radial concave portion of the elastic member 51 (forming the radial lip 70) facing the tubular portion 65 of the slinger 52 radially overlaps the end face of the base portion 53 facing the outer ring 3 in the radial direction, and therefore in the elastic member 51, an extremely radially thickness-reduced portion will not be formed in the vicinity of the axially-outward side of the radial lip 70. Therefore, the aging deformation of the radial lip 70 can be further suppressed, and the torque due to the radial lip can be further reduced. Further, the air and the lubricant can always be made less liable to escape from the interior of the bearing to the exterior of the bearing for a long period of time, and also the air and foreign matters (muddy water and so on) can be made less liable to intrude from the exterior of the bearing into the interior of the bearing.

Furthermore, in the sealing device of the above embodiment, the axial dimension of the fourth portion 56 can be increased. Therefore, a stress developing because of deformation of the second axial lip 55 at the time of the incorporation can be distributed generally uniformly by the whole of the fourth portion 56 and can be borne by it, and the application of a local excessive stress to a portion of the fourth portion 56 can be suppressed. Therefore, the durability of the second axial lip 55 can be markedly enhanced, and the life of the sealing device can be prolonged.

Furthermore, the wheel rolling bearing of the above embodiment is provided with the sealing devices 8, 9 of the present invention, and therefore during the operation, the torques of the sealing devices 8, 9 can be reduced, and also the escape of the air and the lubricant from the interior of the bearing to the exterior of the bearing can be suppressed, and the intrusion of foreign matters (muddy water and so on) from the exterior of the bearing into the interior of the bearing can be suppressed.

Furthermore, in the sealing device of the above embodiment, the radially-inward surface 59 of the fifth portion 57 is the conical surface in the prior-to-incorporation condition. However, in this invention, the radially-inward surface of the fifth portion may be a convex surface in the prior-to-incorporation condition.

Furthermore, in the sealing device of the above embodiment, in the axial cross-section, the radially inwardly-disposed surface 58 of the fourth portion 56 which is a concave surface comprises the generally conical surface-like portion disposed close to the base portion 53, and the portion which is smoothly continuous with this conical surface-like portion and is formed by part of the general spheroid gradually increasing in curvature axially inwardly (toward the flange portion 66). However, in this invention, in the axial cross-section, the whole of the radially inwardly-disposed surface of the fourth portion may comprise a conical surface or may comprise a portion formed by part of a spheroid gradually increasing in curvature axially inwardly (toward the flange portion 66). In this invention, in the axial cross-section, the radially inwardly-disposed surface of the fourth portion may have any shape in so far as it is formed into such a shape that its curvature is gradually increasing axially inwardly (toward the flange portion).

Furthermore, in the above rolling bearing for the wheel, the sealing devices 8, 9 according to one embodiment of the present invention are disposed in the vicinities of the openings formed respectively at both axial sides of the rolling element (tapered roller)-mounting chamber (lubricant-sealed chamber). However, the sealing device of the present invention may be disposed only in the vicinity of the opening formed at one axial side of the rolling element-mounting chamber ( lubricant-sealed chamber). Furthermore, the rolling elements may be balls instead of the tapered rollers, or may be both tapered rollers and balls. The rolling elements may be cylindrical rollers. The second sealing device 9 according to one embodiment of the present invention is mounted in the vicinity of the other axial end portion-side opening of the space between the second inner ring 4 and the outer ring 3, and is mounted at that side where the brake disk-mounting flange 10 does not exist, and therefore the slinger 52 can be easily mounted on the second inner ring 4, and the seal member 48 can be easily mounted on the outer ring 3.

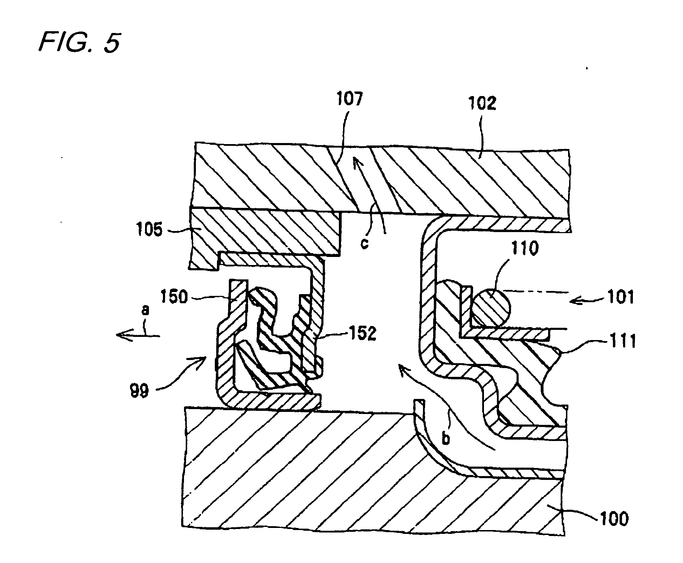

Fig. 5 is an enlarged cross-sectional view of a water pump provided with a sealing device 99 of the present invention, showing an area around the sealing device 99.

This water pump comprises a pump shaft 100, a mechanical seal 101, a pump housing 102, an outer ring 105, and the sealing device 99 of the present invention. The pump housing 102 has a drain hole 107 extending through the pump housing 102. The outer ring 105 is internally fitted to an inner peripheral surface of the pump housing 102 and is fixed thereto.

The pump shaft 100, the outer ring 105 and the sealing device 99 form part of a water pump bearing of the water pump. Namely, although not shown, at that side of an inner peripheral surface of the outer ring 105 shown by arrow a in Fig. 5, a deep groove-type raceway groove and a cylindrical raceway surface are formed in axially-spaced relation and are arranged in this order from the sealing device 99, while at that side of an outer peripheral surface of the pump shaft 100 shown by arrow a in Fig. 5, a deep groove-type raceway groove and a cylindrical raceway surface are formed in axially-spaced relation and are arranged in this order from the sealing device 99.

A plurality of balls held by a cage are disposed between the raceway groove of the outer ring 105 and the raceway groove of the pump shaft 100 and are arranged at predetermined intervals in a circumferential direction. Also, a plurality of cylindrical rollers held by a cage are disposed between the cylindrical raceway surface of the outer ring 105 and the cylindrical raceway surface of the pump shaft 100 and are arranged at predetermined intervals in the circumferential direction.

A core metal member 150 of the sealing device 99 is internally fitted to the inner peripheral surface of the outer ring 105 serving as a first member, and is fixed thereto, while a slinger 152 of the sealing device 99 is externally fitted to the outer peripheral surface of the pump shaft 100 serving as a second member, and is fixed thereto. The sealing device 99 seals an opening of a space between the outer ring 105 and the pump shaft 100 which is disposed close to the mechanical seal 101. In this manner, cooling water of a pump chamber leaking from the mechanical seal 101 in a direction shown by arrow b is prevented from entering the interior of the water pump bearing.

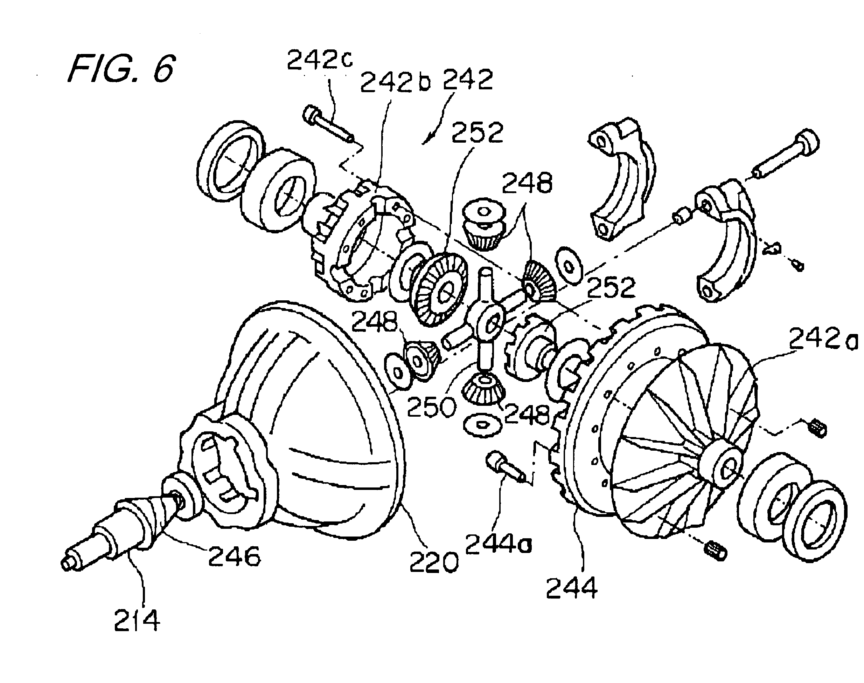

The leaking cooling water of the pump chamber is positively discharged in a direction shown by arrow c to the exterior through the drain hole 107 formed in the pump housing 102. In Fig. 6, 111 denotes a rubber sleeve of the mechanical seal 101, and 110 denotes a coil spring of the mechanical seal 101.

When the sealing device of the present invention is mounted in a water pump as in the water pump shown in Fig. 5, a torque of the sealing device 99 can be reduced during the operation, and also the escape of the air and lubricant from the interior of the bearing to the exterior of the bearing can be suppressed, and the intrusion of the air and foreign matters (muddy water and so on) from the exterior of the bearing into the interior of the bearing can be suppressed.

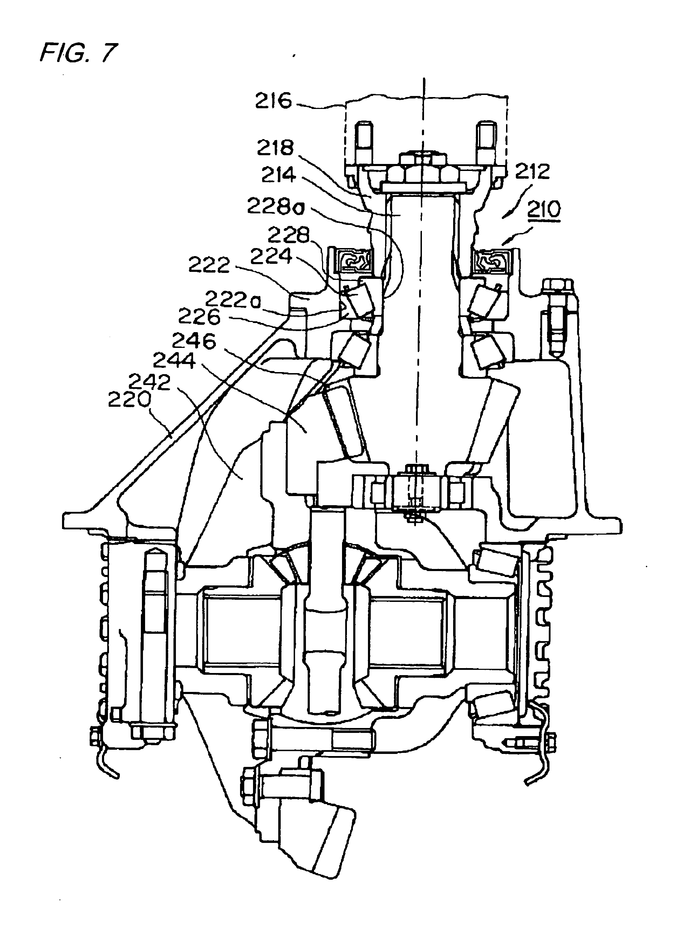

Fig. 6 is an exploded perspective view of a differential gear having a sealing device of the present invention. Fig. 7 is a cross-sectional view taken through a plane containing a center axis of an input shaft of the differential gear (differential device) having the sealing device 210 of the present invention.

As shown in Fig. 6, generally, this differential gear (differential device) used in an automobile or the like comprises a carrier case 220, a ring gear 244 disposed within the carrier case 220 and fixedly secured to a diff case left 242a, and the input shaft 214 rotatably supported by the carrier case 220 and having at its distal end a pinion 246 meshing with the ring gear 244. A diff case 242 comprises the diff case left 242a, and a diff case right 242b coupled to the diff case left 242a by bolts 242c and containing a differential mechanism, and the ring gear 244 is held on the diff case 242 by bolts 244a. A spider 250, having four diff pinions 248 rotatably fitted on its shaft portion extending into a cross-shape, and two side gears 252 meshing with the diff pinions 248, are provided within the diff case right 242b, and left and right axle shafts not shown are spline coupled to the side gears 252.

As shown in Fig. 7, the input shaft 214 is connected to a propeller shaft 216 via a universal joint flange 218, and is driven to be rotated upon transmission of a rotational force of the propeller shaft 216 thereto. When the input shaft 214 having the pinion 246 at its distal end is thus driven to be rotated, the diff case 242 to which the ring gear 244 meshing with the pinion 246 is fixedly secured and the side gears 252 disposed within the diff case 242 rotate about the axes of the axle shafts (not shown) in unison, and when a vehicle travels straight, the diff pinions 249 revolve about the axes of the axle shafts (not shown) without being rotated, so that the side gears 252 rotate, and the left and right axle shafts (not shown) spline-coupled to the side gears 252 rotate at equal speed. On the other hand, when the vehicle changes its advancing direction, so that a difference in the number of revolutions develops between left and right wheels, the diff pinions 248 rotate, thereby adjusting this difference in the number of revolutions so as to prevent tires from slip.

In such differential gear, as shown in Fig. 7, a diff input shaft support portion 212 which rotatably supports the input shaft 214 on the carrier case 220 includes a bearing cage 222 fixedly mounted on the carrier case 220, tapered roller bearings (rolling bearings) 224 supported on the bearing cage 222, and an outer ring 226 of the tapered roller bearing 224 is press-fitted to an inner surface 222a of the bearing cage 222, and also the input shaft 214 is press-fitted to an inner peripheral surface 228a of an inner ring 228 of the tapered roller bearing 224, thereby effecting the mounting operation, and the diff input shaft support portion rotatably supports the input shaft 214 through the tapered roller bearings 224 each having taper rollers which can roll between the outer ring 226 and the inner ring 228 and between a raceway surface of the outer ring 226 and a raceway surface of the inner ring 228.

Lubricating oil is filled in the interior of the carrier case 220 of the diff input shaft support portion 212 in order to make the rotation of the input shaft 214 smooth. In order to prevent this lubricating oil from leaking to an outside space, the sealing device 210 of the present invention is used. An outer peripheral surface of the universal joint 218 (the other member) serving as a shaft member spline-coupled to the input shaft 214 is formed into an outer peripheral cylindrical surface, and the tubular portion 65 of the slinger 52 is fixed to it. The inner surface of the bearing cage 222 (one member) serving as a housing member to which the sealing member 210 is fixed is formed into an inner peripheral cylindrical surface, and the axially-extending portion 60 of the core metal member 50 is fixed to it. The core metal member 50 is fixed to the inner surface of the bearing cage 222 such that the radial lip 70 is disposed at the radially-outward side (the anti-rolling bearing side) while the first axial lip 54 is disposed at the axially-inward side (the rolling bearing side).

When the sealing device of the present invention is mounted on the input shaft of the differential gear (differential device) shown in Fig. 6 and Fig. 7, a torque of the sealing device 210 can be reduced during the operation, and also the escape of gas (air) and the liquid (lubricating oil) from the interior of the differential gear to the outside space can be suppressed, and the intrusion of gas (air) and foreign matters (muddy water and so on) from the outside space into the interior of the differential gear can be suppressed.

In the above embodiments, the sealing device of the present invention is set in the sealing device of the rolling bearing for the wheel, the water pump and the input shaft of the differential gear (differential device). However, in a rolling bearing in which raceway members having raceway surfaces are an outer ring and an inner ring, the sealing device of the present invention may be disposed so as to seal at least one opening of a space between the outer ring and the inner ring. Furthermore, the sealing device of the present invention may be mounted in a rolling bearing provided between a rotor member and a stator member of a motor, and in this case a running cost of the motor can be reduced. Furthermore, the sealing device of the present invention may be mounted on an output shaft member of a differential gear (differential device), an input shaft member of a transmission apparatus, an output shaft member of the transmission apparatus, and a rolling bearing provided between a rotor member and a stator member of a motor, and in this case a running cost of the motor can be reduced.

Furthermore, the sealing device of the present invention can be mounted in any machine in so far as the apparatus includes a first member having an inner peripheral surface, and a second member having an outer peripheral surface, and also the first member and the second member are opposed to each other radially of the inner peripheral surface of the first member. A running cost of the machine having the sealing device of the present invention mounted therein can be reduced, and the sealing ability of the interior of the machine can be enhanced.

### INDUSTRIAL APPLICABILITY

There can be provided the sealing device, the rolling bearing and the bearing for the wheel, in which the torque can be reduced, and also the air and lubricant are less liable to escape from the interior of the bearing to the exterior of the bearing, and the air and foreign matters are less liable to intrude into the bearing from the exterior of the bearing.

## Claims

1. A sealing device (9) comprising:
a core metal member (50) having a tubular axially-extending portion (60) for being fixed to a first member (3), and a radially-extending portion (61) extending from the axially-extending portion (60) in a radial direction of said axially-extending portion (60);
a slinger (52) having a tubular portion (65) for being fixed to a second member (2, 4) rotatable relative to said first member (3), and a flange portion (66) extending from the tubular portion (65) in said radial direction and opposed to said radially-extending portion (61) in an axial direction of said tubular portion (65); and
an elastic member (51) having a base portion (53) fixed to said radially-extending portion (61), and a lip portion which is continuous with said base portion (53) and slides on said slinger (52); and
said lip portion comprises:
a first axial lip (54) extending from said base portion (53) toward said flange portion (66) and sliding on said flange portion (66);
a second axial lip (55) which is disposed at a side of said first axial lip (54), facing said tubular portion (65) in said radial direction, in spaced relation to said first axial lip (54) in said radial direction, and slides on said flange portion (66); and
a radial lip (70) which extends from said base portion (53) away from the flange portion (66) in a direction inclined relative to a center axis of said tubular portion (65) of said slinger (52), and slides on said tubular portion (65); and
said first axial lip is disposed adjacent to a sealed space; and
in a prior-to-incorporation condition before said elastic member (51) is incorporated into said slinger (52), said first axial lip (54) comprises:
a first portion (91) having an extending direction extending from said base portion (53) at least toward said flange portion (66) in said axial direction; and
a second portion (92) having an extending direction which extends from a distal end of said first portion (91), facing said flange portion (66) in said axial direction, away from said tubular portion (65) in said radial direction and also toward said flange portion in said axial direction in such a direction as to form, with the center axis of said tubular portion, an acute angle larger than an acute angle formed by the extending direction of said first portion and the center axis of the tubular portion;
wherein
with respect to a length in a widthwise direction perpendicular to the extending direction of said first axial lip (54) in a cross-section containing the center axis of said tubular portion (65), said second portion (92) includes a portion having a widthwise length shorter than a widthwise length of said first portion (91) perpendicular to said extending direction thereof,
in an after-incorporation condition after said elastic member (51) is incorporated in the said slinger (52), said first axial lip (54) abuts at said distal end edge (98) against said flange portion (66), and also is pressed by said flange portion (66) so that a length between said distal end edge (98) and said base portion (53) in said axial direction is shorter than the length between said distal end edge (98) and said base portion (53) in the axial direction in said prior-to-incorporation condition, and
in a non-worn condition of said elastic member (51) after it is incorporated in said slinger (52), said second axial lip (55) is disposed in spaced relation to said tubular portion (65) in said radial direction, while in a worn condition of said elastic member (51) after it is incorporated in said slinger (52) and also in a condition in which a press-contacting force of said second axial lip (55) for said flange portion (66) is lowered beyond a predetermined force as a result of wear of said second axial lip (55), part of that portion of said second axial lip (55) opposed to said tubular portion (65) of said slinger (52) slides on said tubular portion (65) of said slinger (52); and
said second axial lip comprises:
a fourth portion (56) extending from said base portion (53) toward said tubular portion (65) in said radial direction and also toward said flange portion (66) in said axial direction, and
a fifth portion (57) which extends from a distal end of said fourth portion (56), facing said flange portion (66) in said axial direction, away from said tubular portion (65) in said radial direction and also toward said flange portion (66) in said axial direction, and slides on said flange portion (66), **characterized in that** the first axial lip further comprises:
a third portion (93) having an extending direction which extends from a distal end of said second portion (92), facing away from said tubular portion (65) in said radial direction, at least toward said flange portion (66) in said axial direction; and
said first axial lip (54) has, at said flange portion side of said third portion (93) in said axial direction, a sealing-side inclined surface (96) which extends from that peripheral surface of said third portion (93), facing away from said tubular portion (65) in said radial direction, toward said flange portion (66) in said axial direction and also toward said tubular portion (65) in said radial direction and faces the sealed space, an air-side inclined surface (97) which extends from that peripheral surface of said third portion (93), facing said tubular portion (65) in said radial direction, toward said flange portion (66) in said axial direction and also away from said tubular portion (65) in said radial direction and faces an air-side space, and a distal end edge (98) formed between said sealing-side inclined surface (96) and said air-side inclined surface (97);
with respect to a length in a widthwise direction perpendicular to the extending direction of said first axial lip (54) in a cross-section containing the center axis of said tubular portion (65), said second portion (92) includes a portion having a widthwise length shorter than a widthwise length of said third portion (93) perpendicular to said extending direction thereof except the length of said third portion (93) between said sealing-side inclined surface (96) and said air-side inclined surface (97) in the widthwise direction thereof perpendicular to said extending direction thereof in a predetermined extending direction range from said first distal end edge (98); and
a force which said second axial lip (55) receives is only a force from said slinger (52).

2. A sealing device as set forth in claim 1, wherein:
the portion of said second portion (92), having the widthwise length shorter than the widthwise length of said first portion (91) perpendicular to said extending direction thereof and the widthwise length of said third portion (93) perpendicular to said extending direction thereof except the length of said third portion (93) between said sealing-side inclined surface and said air-side inclined surface in the widthwise direction thereof perpendicular to said extending direction thereof in the predetermined extending direction range from said first distal end edge (98), extends in said extending direction of said second portion (92).

3. A sealing device as set forth in claim 1 or claim 2, wherein:
a bottom of an axial concave portion (73) of that surface of said elastic member (51) forming said radial lip (70), facing away from said flange portion (66) in said axial direction overlaps that end face (77) of said radially-extending portion (61) of said core metal member (50), facing said tubular portion (65), in said radial direction; and
a bottom of a radial concave portion (81) of said elastic member (51) forming said radial lip (70), facing said tubular portion (65) of said slinger (52) is spaced from said end face (77) of said core metal member (50) toward said flange portion (66) in said axial direction.

4. A sealing device as set forth in claim 3, wherein, in the condition before said elastic member (51) is incorporated in said slinger (52), that surface of said fourth portion (56) facing said tubular portion (65) in said radial direction is a concave surface, while that surface of said fifth portion (57) facing said tubular portion (65) in said radial direction is a conical surface or a convex surface.

5. A sealing device as set forth in claim 3 or claim 4, wherein the surface of said fifth portion (57) facing said tubular portion (65) in said radial direction is smoothly continuous, and that surface of said radial lip (70) facing said flange portion (66) in said axial direction is smoothly continuous.

6. A sealing device as set forth in any one of claims 3 to 5, wherein in said prior-to-incorporation condition, in a cross-section in said axial direction, curvature of the surface of said fourth portion (56) facing said tubular portion (65) in said radial direction is gradually increasing toward said flange portion (66) in said axial direction.

7. A sealing device as set forth in any one of claims 3 to 6, wherein a contact point (78) of said radial lip (70) for said tubular portion (65) overlaps said end face (77) of said core metal member (50) in said radial direction.

8. A sealing device as set forth in any one of claims 3 to 7, wherein the bottom of the radial concave portion (81) of said elastic member (51) forming said radial lip (70), facing said tubular portion (65) of said slinger (52) overlaps that portion of said base portion, disposed the closest to said tubular portion (65) in said radial direction, in said radial direction.

9. A rolling bearing comprising:
a sealing device (9) as set forth in any one of claims 1 to 8;
an inner ring (2, 4) having at least one raceway surface;
an outer ring (3) having at least one raceway surface; and
a plurality of rolling elements (5, 6) disposed between said raceway surface of said inner ring (2, 4) and said raceway surface of said outer ring (3); and
said sealing device (9) is disposed such that it seals an opening in at least one side of a rolling element-mounting chamber in said axial direction which is demarcated by an outer peripheral surface of said inner ring (2, 4) and an inner peripheral surface of said outer ring (3) and in which said plurality of rolling elements (5, 6) are disposed; and
said slinger (52) of said sealing device (9) is fixed to said inner ring (2, 4); and
a seal member comprising said elastic member (51) of said sealing device (9) and said core metal member (50) of said sealing device (9) is fixed to said outer ring (3).

10. A rolling bearing for a wheel, comprising:
a sealing device (9) as set forth in any one of claims 1 to 8;
an inner shaft:
a first inner ring (2) fixed to said inner shaft and having a first raceway surface;
a second inner ring (4) fixed to said inner shaft and having a second raceway surface;
an outer ring (3) having a third raceway surface and a fourth raceway surface;
a plurality of first rolling elements (5) disposed between said first raceway surface and said third raceway surface; and
a plurality of second rolling elements (6) disposed between said second raceway surface and said fourth raceway surface; and
said sealing device (9) is disposed such that it seals an opening in at least one side of a rolling element-mounting chamber in said axial direction which is demarcated by an inner peripheral surface of said outer ring (3) and those portions of outer peripheral surfaces of said first inner ring (2) and said second inner ring (4) opposed to the inner peripheral surface of said outer ring (3) and in which said plurality of rolling elements (5, 6) are disposed; and
said slinger (52) of said sealing device (9) is fixed to at least one of said first inner ring (2) and said second inner ring (3); and
a seal member comprising said elastic member (51) of said sealing device (9) and said core metal member (50) of said sealing device (9) is fixed to said outer ring (3).

## Patentansprüche

1. Dichtungsvorrichtung (9), umfassend:
ein Kernmetallelement (50) mit einem röhrenförmigen, sich axial erstreckenden Bereich (60) zum Befestigen an einem ersten Element (3) und
einem sich radial erstreckenden Bereich (61), der sich vom axial erstreckenden Bereich (60) in radialer Richtung des axial erstreckenden Bereichs (60) erstreckt;
einen Schleuderring (52) mit einem röhrenförmigen Bereich (65) zum Befestigen an einem relativ zum ersten Element (3) drehbaren zweiten Element (2, 4), und einem Flanschbereich (66), der sich vom röhrenförmigen Bereich (65) in radialer Richtung und entgegengesetzt zum sich radial erstreckenden Bereich (61) in axialer Richtung des röhrenförmigen Bereichs (65) erstreckt; und
ein elastisches Element (51) mit einem Basisbereich (53), der am sich radial erstreckenden Bereich (61) befestigt ist, und einem Lippenbereich, der mit dem Basisbereich (53) zusammenhängt, und auf dem Schleuderring (52) gleitet; und
der Lippenbereich aufweist:
eine erste axiale Lippe (54), die sich vom Basisbereich (53) zum Flanschbereich (66) hin erstreckt und auf dem Flanschbereich (66) gleitet;
eine zweite axiale Lippe (55), die auf einer Seite der ersten axialen Lippe (54), die dem röhrenförmigen Bereich (65) in radialer Richtung zugewandt ist, in beabstandeter Beziehung zur ersten axialen Lippe (54) in radialer Richtung angeordnet ist und auf dem Flanschbereich (66) gleitet; und eine radiale Lippe (70), die sich vom Basisbereich (53) vom Flanschbereich (66) weg in eine Richtung erstreckt, die relativ zu einer Mittelachse des röhrenförmigen Bereichs (65) des Schleuderrings (52) geneigt ist und auf dem röhrenförmigen Bereich (65) gleitet; und
die erste axiale Lippe benachbart zu einem abgedichteten Raum angeordnet ist; und
die erste axiale Lippe (55) in einem Zustand vor Einbau des elastischen Elements (51) in den Schleuderring (52) umfasst:
einen ersten Bereich (91), der sich vom Basisbereich (53) in axialer Richtung zumindest zum Flanschbereich (66) erstreckt; und
einen zweiten Bereich (92) mit einer Ersteckungsrichtung, die sich von einem distalen Ende des ersten Bereichs (91), der dem Flanschbereich (66) in axialer Richtung zugewandt ist, in radialer Richtung vom röhrenförmigen Bereich (65) weg und zudem in axialer Richtung zum Flanschbereich (66) hin in einer solchen Richtung erstreckt, um mit der Mittelachse des röhrenförmigen Bereichs einen größeren spitzen Winkel als einen spitzen Winkel zu bilden, der von der Erstreckungsrichtung des ersten Bereichs und
der Mittelachse des röhrenförmigen Bereichs gebildet wird;
wobei
der zweite Bereich (92) in Bezug auf eine Länge in Breitenrichtung senkrecht zur Erstreckungsrichtung der ersten axialen Lippe (54) in einem Querschnitt,
der die Mittelachse des röhrenförmigen Bereichs (65) beinhaltet, einen Bereich mit einer Länge der Breite nach aufweist, die kürzer als eine Länge der Breite nach des ersten Bereichs (91) senkrecht zu dessen Erstreckungsrichtung ist,
die erste axiale Lippe (54) in einem Zustand nach Einbau des elastischen Elements (51) im Schleuderring (52) an einer distalen Kopfseite (98) am Flanschbereich (66) anliegt und zudem durch den Flanschbereich (66) angepresst wird, sodass eine Länge zwischen der distalen Kopfseite (98) und dem Basisbereich (53) in Axialrichtung kürzer als die Länge zwischen der distalen Kopfseite (98) und dem Basisbereich (53) in Axialrichtung im Zustand vor dem Einbau ist, und
in einem nicht verschlissenen Zustand des elastischen Elements (51) nach Einbau im Schleuderring (52) die zweite axiale Lippe (55) in beabstandeter Beziehung zum röhrenförmigen Bereich (65) in radialer Richtung angeordnet ist, während in einem verschlissenen Zustand des elastischen Element (51) nach Einbau im Schleuderring (52) und zudem in einem Zustand, bei dem eine Anpresskraft der zweiten axialen Lippe (55) für den Flanschbereich (66) infolge einer Abnutzung der zweiten axialen Lippe (55) über eine vorgegebene Kraft hinaus verringert ist, ein Teil jenes Bereichs der zweiten axialen Lippe (55), die dem röhrenförmigen Bereich (65) des Schleuderrings 52) gegenüberliegt, auf dem röhrenförmigen Bereich (65) des Schleuderrings (52) gleitet; und
die zweite axiale Lippe umfasst:
einen vierten Bereich (56), der sich in radialer Richtung vom Basisbereich (53) zum röhrenförmigen Bereich und zudem in Axialrichtung zum Flanschbereich (66) erstreckt, und
einen fünften Bereich (57), der sich von einem distalen Ende des vierten Bereichs (56), das dem Flanschbereich (66) in Axialrichtung zugewandt ist, vom röhrenförmigen Bereich (65) in radialer Richtung weg und zudem in axialer Richtung zum Flanschbereich (66) hin erstreckt und auf dem Flanschbereich (66) gleitet, **dadurch gekennzeichnet, dass** die erste axiale Lippe ferner umfasst:
einen dritten Bereich (93) mit einer Erstreckungsrichtung, die sich von einem distalen Ende des zweiten Bereichs (92), der vom röhrenförmigen Bereich (65) in radialer Richtung abgewandt ist, zumindest zum Flanschbereich (66) in Axialrichtung erstreckt; und
die erste axiale Lippe (54), zumindest auf der Flanschbereichsseite des dritten Bereichs (93) in Axialrichtung, eine dichtungsseitige geneigte Fläche (96), die sich von der Umfangsfläche des dritten Bereichs (93), die vom röhrenförmigen Bereich in radialer Richtung abgewandt ist, in Axialrichtung zum Flanschbereich (66) und zudem in radialer Richtung zum röhrenförmigen Bereich (65) hin erstreckt und dem abgedichteten Raum zugewandt ist, eine luftseitige geneigte Fläche (97), die sich von der Umfangsfläche des dritten Bereichs (93), die dem röhrenförmigen Bereich (65) in radialer Richtung zugewandt ist, zum Flanschbereich (66) in Axialrichtung und zudem vom röhrenförmigen Bereich (65) in radialer Richtung weg erstreckt und einem luftseitigen Raum zugewandt ist, und eine distale Kopfseite (98) aufweist, die zwischen der dichtungsseitigen geneigten Fläche (96) und der luftseitigen geneigten Fläche (97) ausgebildet ist;
der zweite Bereich (92) in Bezug auf eine Länge in Breitenrichtung senkrecht zur Erstreckungsrichtung der ersten axialen Lippe (54) in einem Querschnitt, der die Mittelachse des röhrenförmigen Bereichs (65) beinhaltet, einen Bereich umfasst, der eine kürzere Länge der Breite nach als eine Länge der Breite nach des dritten Bereichs (93) senkrecht zu dessen Erstreckungsrichtung mit Ausnahme der Länge des dritten Bereichs (93) zwischen der dichtungsseitigen geneigten Fläche (96) und der luftseitigen geneigten Fläche (97) in deren Breitenrichtung senkrecht zur deren Erstreckungsrichtung in einem vorgegebenen Erstreckungsrichtungsbereich vom ersten distalen Kopfende (98) aufweist; und
eine Kraft, die die zweite axiale Lippe (55) aufnimmt, lediglich eine Kraft vom Schleuderring (52) ist.

2. Dichtungsvorrichtung nach Anspruch 1, wobei:
der Bereich des zweiten Bereichs (92), der die kürzere Länge der Breite nach als die Länge der Breite nach des ersten Bereichs (91) senkrecht zu dessen Erstreckungsrichtung und die Länge der Breite nach des dritten Bereichs (93) senkrecht zu dessen Erstreckungsrichtung mit Ausnahme der Länge des dritten Bereichs (93) zwischen der dichtungsseitigen geneigten Fläche und der luftseitigen geneigte Fläche in deren Breitenrichtung senkrecht zur deren Erstreckungsrichtung im vorgegebenen Erstreckungsrichtungsbereich vom ersten distalen Kopfende (98) aufweist, sich in der Erstreckungsrichtung des zweiten Bereichs (92) erstreckt.

3. Dichtungsvorrichtung nach Anspruch 1 oder Anspruch 2, wobei:
ein Boden eines axialen konkaven Bereichs (73) jener Fläche des elastischen Elements (51), der die radiale Lippe (70) bildet, vom Flanschbereich (66) abgewandt ist, jene Stirnfläche (77) des sich radial erstreckenden Bereichs (61) des Kernmetallelements (50), die dem röhrenförmigen Bereich (65) in radialer Richtung zugewandt ist, in radialer Richtung überlappt; und
ein Boden eines radialen konkaven Bereichs (81) des elastischen Elements (51), das die radiale Lippe (70) bildet, der dem röhrenförmigen Bereich (65) des Schleuderrings (52) zugewandt ist, von der Stirnseite (77) des Kernmetallelements (50) zum Flanschbereich (66) in axialer Richtung beabstandet ist.

4. Dichtungsvorrichtung nach Anspruch 3, wobei in dem Zustand, bevor das elastische Element (51) in den Schleuderring (52) eingebaut ist, jene Fläche des vierten Bereichs (56), die dem röhrenförmigen Bereich (65) in radialer Richtung zugewandt ist, eine konkave Fläche ist, während jene Fläche des fünften Bereichs (57), die dem röhrenförmigen Bereich (65) in radialer Richtung zugewandt ist, eine konische Fläche oder eine konvexe Fläche ist.

5. Dichtungsvorrichtung nach Anspruch 3 oder Anspruch 4, wobei die Fläche des fünften Bereichs (57), die dem röhrenförmigen Bereich (65) in radialer Richtung zugewandt ist, nahtlos durchgehend ist, und jene Fläche der radialen Lippe (50), die dem Flanschbereich (66) in Axialrichtung zugewandt ist, nahtlos durchgehend ist.

6. Dichtungsvorrichtung nach einem der Ansprüche 3 bis 5, wobei im Zustand vor dem Einbau in einem Querschnitt in axialer Richtung eine Krümmung der Fläche des vierten Bereichs (56), die dem röhrenförmigen Bereich (65) in radialer Richtung zugewandt ist, sich graduell zum Flanschbereich (66) in Axialrichtung vergrößert.

7. Dichtungsvorrichtung nach einem der Ansprüche 3 bis 6, wobei eine Kontaktstelle (78) der radialen Lippe (70) für den röhrenförmigen Bereich (65) die Stirnseite (77) des Kernmetallelements (50) in radialer Richtung überlappt.

8. Dichtungsvorrichtung nach einem der Ansprüche 3 bis 7, wobei der Boden des radialen konkaven Bereichs (81) des elastischen Elements (51), die die radiale Lippe (70) bildet, der dem röhrenförmigen Bereich des Schleuderrings (52) zugewandt ist, jenen Bereich des Basisbereichs, der dem röhrenförmigen Bereich (65) in radialer Richtung nächstliegend angeordnet ist, in radialer Richtung überlappt.

9. Wälzlager, umfassend:
eine Dichtungsvorrichtung (9) nach einem der Ansprüche 1 bis 8;
einen Innenring (2, 4) mit zumindest einer Laufringfläche;
einen Außenring (3) mit zumindest einer Laufringfläche; und
eine Mehrzahl von Wälzelementen (5, 6), die zwischen der Laufringfläche des Innenrings (2, 4) und der Laufringfläche des Außenrings (3) angeordnet sind; und
die Dichtungsvorrichtung (9) so angeordnet ist, dass diese eine Öffnung auf zumindest einer Seite einer Wälzelement-Aufnahmekammer in axialer Richtung abdichtet, die durch eine Außenumfangsfläche des Innenrings (2, 4) und eine Innenumfangsfläche des Außenrings (3) abgegrenzt wird und in welcher die Mehrzahl der Wälzelemente (5, 6) angeordnet sind; und
der Schleuderring (52) der Dichtungsvorrichtung am Innenring (2, 4) befestigt ist; und
ein Dichtelement, welches das elastische Element (51) der Dichtungsvorrichtung (9) und das Kernmetallelement (50) der Dichtungsvorrichtung (9) umfasst, am Außenring (3) befestigt ist.

10. Wälzlager für ein Rad, umfassend:
eine Dichtungsvorrichtung (9) nach einem der Ansprüche 1 bis 8;
eine Innenwelle;
einen ersten Innenring (2), der an der Innenwelle befestigt ist und eine erste Laufringfläche aufweist;
einen zweiten Innenring (4), der an der Innenwelle befestigt ist und eine zweite Laufringfläche aufweist;
einen Außenring (3), der eine dritte Laufringfläche und eine vierte Laufringfläche aufweist;
eine Mehrzahl von ersten Wälzelementen (5), die zwischen der ersten Laufringfläche und der dritten Laufringfläche angeordnet sind; und eine Mehrzahl von zweiten Wälzelementen (6) die zwischen der zweiten Laufringfläche und der vierten Laufringfläche angeordnet sind; und
die Dichtungsvorrichtung (9) so angeordnet ist, dass diese eine Öffnung auf zumindest einer Seite einer Wälzelement-Aufnahmekammer in axialer Richtung abdichtet, die von einer Innenumfangsfläche des Außenrings (3) und jenen Bereichen der Außenumfangsflächen des ersten Innenrings (2) und des zweiten Innenrings (4) abgegrenzt wird, die der Innenumfangsfläche des Außenrings (3) gegenüberliegen und in der die Mehrzahl der Wälzelemente (5, 6) angeordnet sind; und
der Schleuderring (52) der Dichtungsvorrichtung (9) am ersten Innenring (2) und/oder dem zweiten Innenring (3) befestigt ist; und
ein Dichtelement, welches das elastische Element (51) der Dichtungsvorrichtung (9) und das Kernmetallelement (50) der Dichtungsvorrichtung (9) umfasst, am Außenring (3) befestigt ist.

## Revendications

1. Dispositif d'étanchéité (9) comprenant:
un élément formant noyau métallique (50) présentant une partie tubulaire s'étendant axialement (60) destinée à être fixée sur un premier élément (3), et une partie s'étendant radialement (61), s'étendant à partir de la partie s'étendant axialement (60) dans une direction radiale de ladite partie s'étendant axialement (60) ;
un anneau (52) présentant une partie tubulaire (65) destinée à être fixée sur un second élément (2, 4) pouvant tourner par rapport audit premier élément (3), et une partie en collerette (66) s'étendant à partir de la partie tubulaire (65) dans ladite direction radiale et opposée à ladite partie s'étendant radialement (61) dans une direction axiale de ladite partie tubulaire (65) ; et
un élément élastique (51) présentant une partie de base (53) fixée sur ladite partie s'étendant radialement (61), et une partie formant lèvre qui est continue avec ladite partie de base (53) et glisse sur ledit anneau (52) ; et
ladite partie formant lèvre comprend :
une première lèvre axiale (54) s'étendant à partir de ladite partie de base (53) vers ladite partie en collerette (66) et glissant sur ladite partie en collerette (66) ;
une seconde lèvre axiale (55) qui est disposée sur un côté de ladite première lèvre axiale (54), orientée face à ladite partie tubulaire (65) dans ladite direction radiale, en relation espacée par rapport à ladite première lèvre axiale (54) dans ladite direction radiale, et glisse sur ladite partie en collerette (66) ; et
une lèvre radiale (70) qui s'étend à partir de ladite partie de base (53) à l'écart de la partie en collerette (66) dans une direction inclinée par rapport à un axe central de ladite partie tubulaire (65) dudit anneau (52), et glisse sur ladite partie tubulaire (65) ; et
ladite première lèvre axiale est disposée de manière adjacente à un espace étanche ; et
dans un état avant incorporation, avant que ledit élément élastique (51) soit incorporé sur ledit anneau (52), ladite première lèvre axiale (54) comprend :
une première partie (91) présentant une direction longitudinale s'étendant à partir de ladite partie de base (53) au moins vers ladite partie en collerette (66) dans ladite direction axiale ; et
une deuxième partie (92) présentant une direction longitudinale qui s'étend à partir d'une extrémité distale de ladite première partie (91), orientée face à ladite partie en collerette (66) dans ladite direction axiale, à l'écart de ladite partie tubulaire (65) dans ladite direction radiale ainsi que vers ladite partie en collerette dans ladite direction axiale dans une direction telle qu'elle forme, avec l'axe central de ladite partie tubulaire, un angle aigu supérieur à un angle aigu formé par la direction longitudinale de ladite première partie et l'axe central de la partie tubulaire ;
dans lequel
par rapport à une longueur dans une direction transversale perpendiculaire à la direction longitudinale de ladite première lèvre axiale (54) sur une section transversale contenant l'axe central de ladite partie tubulaire (65), ladite deuxième partie (92) comporte une partie présentant une longueur transversale inférieure à une longueur transversale de ladite première partie (91) perpendiculaire à ladite direction longitudinale de celle-ci,
dans un état après incorporation, après que ledit élément élastique (51) a été incorporé sur ledit anneau (52), ladite première lèvre axiale (54) vient en butée sur ledit bord d'extrémité distale (98) contre ladite partie en collerette (66), et est aussi pressée par ladite partie en collerette (66) de telle sorte qu'une longueur entre ledit bord d'extrémité distale (98) et ladite partie de base (53) dans ladite direction axiale est inférieure à la longueur entre ledit bord d'extrémité distale (98) et ladite partie de base (53) dans la direction axiale, dans ledit état avant incorporation, et
dans un état non usé dudit élément élastique (51) après qu'il a été incorporé sur ledit anneau (52), ladite seconde lèvre axiale (55) est disposée en relation espacée par rapport à ladite partie tubulaire (65) dans ladite direction radiale, alors que dans un état usé dudit élément élastique (51) après qu'il a été incorporé sur ledit anneau (52) ainsi que dans un état dans lequel un effort de contact en pression de ladite seconde lèvre axiale (55) sur ladite partie en collerette (66) est réduit au-delà d'un effort prédéterminé en résultat d'une usure de ladite seconde lèvre axiale (55), une partie de cette partie de ladite seconde lèvre axiale (55) opposée à ladite partie tubulaire (65) dudit anneau (52) glisse sur ladite partie tubulaire (65) dudit anneau (52) ; et
ladite seconde lèvre axiale comprend :
une quatrième partie (56) s'étendant à partir de ladite partie de base (53) vers ladite partie tubulaire (65) dans ladite direction radiale ainsi que vers ladite partie en collerette (66) dans ladite direction axiale, et
une cinquième partie (57) qui s'étend à partir d'une extrémité distale de ladite quatrième partie (56), orientée face à ladite partie en collerette (66) dans ladite direction axiale, à l'écart de ladite partie tubulaire (65) dans ladite direction radiale ainsi que vers ladite partie en collerette (66) dans ladite direction axiale, et glisse sur ladite partie en collerette (66), **caractérisé en ce que** la première lèvre axiale comprend, en outre :
une troisième partie (93) présentant une direction longitudinale qui s'étend à partir d'une extrémité distale de ladite deuxième partie (92), orientée à l'opposé de ladite partie tubulaire (65) dans ladite direction radiale, au moins vers ladite partie en collerette (66) dans ladite direction axiale ; et
ladite première lèvre axiale (54) présente, du côté de ladite partie en collerette de ladite troisième partie (93) dans ladite direction axiale, une surface inclinée du côté étanchéité (96) qui s'étend à partir de la surface périphérique de ladite troisième partie (93), orientée à l'opposé de ladite partie tubulaire (65) dans ladite direction radiale, vers ladite partie en collerette (66) dans ladite direction axiale ainsi que vers ladite partie tubulaire (65) dans ladite direction radiale et orientée face à l'espace étanche, une surface inclinée du côté extérieur (97) qui s'étend à partir de la surface périphérique de ladite troisième partie (93), orientée face à ladite partie tubulaire (65) dans ladite direction radiale, vers ladite partie en collerette (66) dans ladite direction axiale ainsi qu'à l'opposé de ladite partie tubulaire (65) dans ladite direction radiale et orientée face à un espace côté extérieur, et un bord d'extrémité distale (98) formé entre ladite surface inclinée du côté étanchéité (96) et ladite surface inclinée du côté extérieur (97) ;
par rapport à une longueur dans une direction transversale perpendiculaire à la direction longitudinale de ladite première lèvre axiale (54) dans une section transversale contenant l'axe central de ladite partie tubulaire (65), ladite deuxième partie (92) comporte une partie présentant une longueur transversale inférieure à une longueur transversale de ladite troisième partie (93) perpendiculaire à ladite direction longitudinale de celle-ci à l'exception de la longueur de ladite troisième partie (93) comprise entre ladite surface inclinée du côté étanchéité (96) et ladite surface inclinée du côté extérieur (97) dans la direction transversale de celle-ci perpendiculaire à ladite direction longitudinale de celle-ci sur une plage de direction longitudinale prédéterminée à partir dudit premier bord d'extrémité distale (98) ; et
un effort que reçoit ladite seconde lèvre axiale (55) est uniquement un effort provenant dudit anneau (52).

2. Dispositif d'étanchéité selon la revendication 1, dans lequel :
la partie de ladite deuxième partie (92), présentant une longueur transversale inférieure à la longueur transversale de ladite première partie (91) perpendiculaire à ladite direction longitudinale de celle-ci et la longueur transversale de ladite troisième partie (93) perpendiculaire à ladite direction longitudinale de celle-ci à l'exception de la longueur de ladite troisième partie (93) entre ladite surface inclinée du côté étanchéité et ladite surface inclinée du côté extérieur dans la direction transversale de celle-ci perpendiculaire à ladite direction longitudinale de celle-ci sur la plage de direction longitudinale prédéterminée à partir dudit premier bord d'extrémité distale (98), s'étend dans ladite direction longitudinale de ladite deuxième partie (92).

3. Dispositif d'étanchéité selon la revendication 1 ou 2, dans lequel :
une partie inférieure d'une partie axiale concave (73) de la surface dudit élément élastique (51) formant ladite lèvre radiale (70), orientée à l'opposé de ladite partie en collerette (66) dans ladite direction axiale recouvre la face d'extrémité (77) de ladite partie s'étendant radialement (61) dudit élément métallique formant noyau (50), orientée face à ladite partie tubulaire (65), dans ladite direction radiale ; et
une partie inférieure d'une partie radiale concave (81) dudit élément élastique (51) formant ladite lèvre radiale (70), orientée face à ladite partie tubulaire (65) dudit anneau (52) est espacée par rapport à ladite face d'extrémité (77) dudit élément métallique formant noyau (50) vers ladite partie en collerette (66) dans ladite direction axiale.

4. Dispositif d'étanchéité selon la revendication 3, dans lequel, dans l'état avant que ledit élément élastique (51) soit incorporé sur ledit anneau (52), la surface de ladite quatrième partie (56) orientée face à ladite partie tubulaire (65) dans ladite direction radiale est une surface concave, alors que la surface de ladite cinquième partie (57) orientée face à ladite partie tubulaire (65) dans ladite direction radiale est une surface conique ou une surface convexe.

5. Dispositif d'étanchéité selon la revendication 3 ou 4, dans lequel la surface de ladite cinquième partie (57) orientée face à ladite partie tubulaire (65) dans ladite direction radiale est continue sans irrégularité, et la surface de ladite lèvre radiale (70) orientée face à ladite partie en collerette (66) dans ladite direction axiale est continue sans irrégularité.

6. Dispositif d'étanchéité selon l'une quelconque des revendications 3 à 5, dans lequel, dans ledit état avant incorporation, suivant une section transversale dans ladite direction axiale, la courbure de la surface de ladite quatrième partie (56) orientée face à ladite partie tubulaire (65) dans ladite direction radiale augmente progressivement vers ladite partie en collerette (66) dans ladite direction axiale.

7. Dispositif d'étanchéité selon l'une quelconque des revendications 3 à 6, dans lequel un point de contact (78) de ladite lèvre radiale (70) sur ladite partie tubulaire (65) recouvre ladite face d'extrémité (77) dudit élément métallique formant noyau (50) dans ladite direction radiale.

8. Dispositif d'étanchéité selon l'une quelconque des revendications 3 à 7, dans lequel la partie inférieure de la partie radiale concave (81) dudit élément élastique (51) formant ladite lèvre radiale (70), orientée face à ladite partie tubulaire (65) dudit anneau (52) recouvre la partie de ladite partie de base, qui est disposée au plus près de ladite partie tubulaire (65) dans ladite direction radiale, suivant ladite direction radiale.

9. Palier à roulement comprenant :
un dispositif d'étanchéité (9) selon l'une quelconque des revendications 1 à 8 ;
une bague interne (2, 4) présentant au moins une surface de piste de roulement ;
une bague externe (3) présentant au moins une surface de piste de roulement ; et
une pluralité d'éléments roulants (5, 6) disposés entre ladite surface de piste de roulement de ladite bague interne (2, 4) et ladite surface de piste de roulement de ladite bague externe (3) ; et
ledit dispositif d'étanchéité (9) est disposé de telle sorte qu'il assure l'étanchéité d'une ouverture sur au moins un côté d'une chambre de montage d'élément roulant dans ladite direction axiale qui est délimitée par une surface périphérique externe de ladite bague interne (2, 4) et une surface périphérique interne de ladite bague externe (3) et dans laquelle les éléments roulants de ladite pluralité d'éléments roulants (5, 6) sont disposés , et
ledit anneau (52) dudit dispositif d'étanchéité (9) est fixé sur ladite bague interne (2, 4) ; et
un élément d'étanchéité comprenant ledit élément élastique (51) dudit dispositif d'étanchéité (9) et ledit élément métallique formant noyau (50) dudit dispositif d'étanchéité (9) est fixé sur ladite bague externe (3).

10. Palier à roulement pour une roue, comprenant :
un dispositif d'étanchéité (9) selon l'une quelconque des revendications 1 à 8 ;
un arbre interne ;
une première bague interne (2) fixée sur ledit arbre interne et présentant une première surface de piste de roulement ;
une seconde bague interne (4) fixée sur ledit arbre interne et présentant une deuxième surface de piste de roulement ;
une bague externe (3) présentant une troisième surface de piste de roulement et une quatrième surface de piste de roulement ;
une pluralité de premiers éléments roulants (5) disposés entre ladite première surface de piste de roulement et ladite troisième surface de piste de roulement ; et
une pluralité de seconds éléments roulants (6) disposés entre ladite deuxième surface de piste de roulement et ladite quatrième surface de piste de roulement ; et
ledit dispositif d'étanchéité (9) est disposé de telle sorte qu'il assure l'étanchéité d'une ouverture sur au moins un côté d'une chambre de montage d'élément roulant dans ladite direction axiale qui est délimitée par une surface périphérique interne de ladite bague externe (3) et les parties de surfaces périphériques externes de ladite première bague interne (2) et de ladite seconde bague interne (4) opposées à la surface périphérique interne de ladite bague externe (3) et dans laquelle les éléments roulants de ladite pluralité d'éléments roulants (5, 6) sont disposés ; et
ledit anneau (52) dudit dispositif d'étanchéité (9) est fixé sur au moins l'une de ladite première bague interne (2) et ladite seconde bague interne (3) ; et
un élément d'étanchéité comprenant ledit élément élastique (51) dudit dispositif d'étanchéité (9) et ledit élément métallique formant noyau (50) dudit dispositif d'étanchéité (9) est fixé sur ladite bague externe (3).
